# EUROPEAN PATENT APPLICATION

(11) **EP 4 113 240 A1**
(43) Date of publication of application: **04.01.2023**
(21) Application number: 20927314.3
(22) Date of filing: 26.03.2020
(51) Int. Cl.: G05D 1/02, G01C 21/34

(54) **DRIVING CONTROL METHOD AND APPARATUS**

(71) Applicant: Huawei Technologies Co., Ltd., Shenzhen, Guangdong 518129, (CN)
(72) Inventor: ZHANG, Huaen, Shenzhen, Guangdong 518129 (CN); WANG, Jun, Shenzhen, Guangdong 518129 (CN)
(74) Representative: Goddar, Heinz J.
(86) International application number: PCT/CN2020/081507
(87) International publication number: WO 2021/189386

(57) **Abstract**

A driving control method and apparatus are provided. The method may be applied to the intelligent vehicle field such as intelligent driving/automatic driving. The driving control method includes: After calculating a conventional path in a conventional map, the driving control apparatus searches a high-definition map for a high-definition path that matches the conventional path. If the driving control apparatus finds the high-definition path, the driving control apparatus performs real-time navigation broadcast by using the conventional path, and performs automatic driving by using the found high-definition path. According to the driving control method and apparatus, the conventional map has advantages, for example, has rich road sections and real-time traffic information update, a calculated conventional path is more proper, and real-time navigation broadcast has a better effect; and using a high-definition path to implement automatic vehicle driving can reduce user operations, thereby improving user experience.

## Description

### TECHNICAL FIELD

This application relates to the field of automatic driving technologies, and in particular, to a driving control method and apparatus.

### BACKGROUND

Currently, automatic driving usually means that an automatic driving module inside a vehicle performs path calculation and real-time navigation broadcast based on a high-definition map and then performs automatic driving. Generally, the high-definition map can accurately describe traffic information such as roads, lanes, traffic lights, stop lines, and zebra crossings, and can also achieve centimeter-level precision. However, production of the high-definition map is independent of that of a conventional map. Therefore, although accuracy of the high-definition map is better than that of the conventional map, road richness (for example, road names, road forms, road function levels, and road traffic restrictions) of the high-definition map is poorer than that of the conventional map.

However, compared with advantages of the conventional map such as long-term historical operation and maintenance accumulation and real-time traffic information synchronization, the high-definition map currently lacks real-time traffic information support and a large quantity of long-term historical operation and maintenance records. Therefore, a path calculated based on the high-definition map is less proper than a path calculated based on the conventional map. In addition, in terms of real-time navigation broadcast, a broadcast effect of the high-definition map is far poorer than that of the conventional map. In this case, performing path calculation and real-time navigation broadcast based on the high-definition map may reduce user experience.

### SUMMARY

This application provides a driving control method and apparatus, to implement path calculation and real-time navigation broadcast by combining a high-definition map and a conventional map, thereby improving user experience.

According to a first aspect, an embodiment of this application provides a driving control method. The method may be applied to a vehicle-mounted device such as a driving control apparatus. The method may include the following steps:

The driving control apparatus calculates a first conventional path in a conventional map based on a first location and a second location. When a target high-definition path is found in a high-definition map based on the first conventional path, if the target high-definition path and the first conventional path include a same road section, the driving control apparatus enables real-time navigation broadcast based on the first conventional path, and enables an automatic driving mode in which the target high-definition path is used for path navigation.

Because the conventional map has advantages such as rich road sections and updated real-time traffic information, a conventional path calculated in the conventional map is more proper, and performing real-time navigation broadcast based on a conventional path in the conventional map can ensure that a user receives more traffic information more accurately. Further, using a high-definition path in the high-definition map to implement automatic driving of a vehicle can reduce user operations. In conclusion, according to this solution, the apparatus can ensure automatic driving of the vehicle as much as possible, and further implement path calculation and real-time navigation broadcast by combining the high-definition map and the conventional map. This can improve user experience.

In a possible design, if the target high-definition path includes fewer road sections than the first conventional path, the driving control apparatus performs the following steps:
calculating at least one first to-be-selected high-definition path in the high-definition map based on the first location and the second location; prompting a user with path information of the target high-definition path and path information of each of the at least one first to-be-selected high-definition path; receiving a first path selection instruction of the user; and if the driving control apparatus determines, according to the first path selection instruction, that the user selects the target high-definition path, enabling the real-time navigation broadcast based on the first conventional path, and enabling a preparatory automatic driving mode in which the target high-definition path is used for path navigation, where the preparatory automatic driving mode is a driving mode switched between an automatic driving mode and a manual driving mode; or if the driving control apparatus determines, according to the first path selection instruction, that the user selects a first high-definition path from the at least one first to-be-selected high-definition path, searching the conventional map based on the first high-definition path for a first target conventional path, where the first target conventional path and the first high-definition path include a same road section; and if the driving control apparatus finds the first target conventional path, enabling real-time navigation broadcast based on the first target conventional path, and enabling an automatic driving mode in which the first high-definition path is used for path navigation; or if the driving control apparatus does not find the first target conventional path, enabling real-time navigation broadcast based on the first high-definition path, and enabling an automatic driving mode in which the first high-definition path is used for path navigation.

According to this design, when the apparatus finds the target high-definition path that partially matches the first conventional path in the high-definition map, the apparatus may perform path calculation again in the high-definition map to obtain the at least one first to-be-selected high-definition path for the user to select a high-definition path from the target high-definition path and the at least one first to-be-selected high-definition path.

When the user selects the target high-definition path, the apparatus may perform real-time navigation broadcast based on the first conventional path, and perform preparatory automatic driving based on the target high-definition path that partially matches the first conventional path, so as to ensure that the vehicle uses the automatic driving mode as much as possible, and further implement path calculation and real-time navigation broadcast by using the conventional map. This can improve user experience.

When the user selects the first high-definition path from the at least one first to-be-selected high-definition path, if the apparatus finds the first target conventional path that completely matches the first high-definition path in the conventional map, the apparatus may perform real-time navigation broadcast based on the first target conventional path, and perform automatic driving based on the first high-definition path. In this way, although a detour, a long driving time, or the like may exist for the first high-definition path, the apparatus can ensure that the vehicle uses a full-process automatic driving mode, and further implement real-time navigation broadcast by using the conventional map. This can still ensure user experience.

In a possible design, the apparatus may prompt the user with the path information of the target high-definition path and the path information of each of the at least one first to-be-selected high-definition path in the following manner:
displaying the high-definition map on a display, displaying the target high-definition path in the high-definition map, and displaying at least one or a combination of the following information: a start location of the target high-definition path, an end location of the target high-definition path, each manual driving duration, each manual driving distance, each automatic driving duration, each automatic driving distance, total manual driving duration, a total manual driving distance, total automatic driving duration, and a total automatic driving distance; and
displaying each first to-be-selected high-definition path in the high-definition map, and displaying at least one or a combination of the following information of each first to-be-selected high-definition path: a total length of each first to-be-selected high-definition path, total duration of automatic driving corresponding to each first to-be-selected high-definition path, and a length difference between each first to-be-selected high-definition path and the first conventional path.

According to this design, the apparatus may display detailed information about the target high-definition path and each first to-be-selected high-definition path to the user, so that the user can further understand the foregoing high-definition paths, and the user subsequently performs path analysis, comparison, and screening.

In a possible design, when the apparatus does not find the target high-definition path in the high-definition map based on the first conventional path, the apparatus performs the following steps:
calculating at least one second to-be-selected high-definition path in the high-definition map based on the first location and the second location; and prompting the user with path information of each of the at least one second to-be-selected high-definition path;
receiving a second path selection instruction of the user, and determining, according to the second path selection instruction, a second high-definition path selected by the user from the at least one to-be-selected high-definition path; searching the conventional map based on the second high-definition path for a second target conventional path, where the second target conventional path and the second high-definition path include a same road section; and if the apparatus finds the second target conventional path, enabling real-time navigation broadcast based on the second target conventional path, and enabling an automatic driving mode in which the second high-definition path is used for path navigation; or if the apparatus does not find the second target conventional path, enabling a real-time navigation broadcast function based on the second high-definition path, and enabling an automatic driving mode in which the second high-definition path is used for path navigation.

According to this design, when the apparatus does not find the target high-definition path that matches the first conventional path, the apparatus may perform path calculation again in the high-definition map to obtain the at least one second to-be-selected high-definition path for the user to select a high-definition path from the at least one second to-be-selected high-definition path.

When the user selects the second high-definition path from the at least one second to-be-selected high-definition path, if the apparatus finds the second target conventional path that completely matches the second high-definition path in the conventional map, the apparatus may perform real-time navigation broadcast based on the second target conventional path, and perform automatic driving based on the second high-definition path. In this way, although a detour, a long driving time, or the like may exist for the second high-definition path, the apparatus can ensure that the vehicle uses a full-process automatic driving mode, and further implement real-time navigation broadcast by using the conventional map. This can still ensure user experience.

In a possible design, the apparatus may prompt the user with the path information of each of the at least one second to-be-selected high-definition path in the following manner:
displaying the high-definition map on the display, displaying each second to-be-selected high-definition path in the high-definition map, and displaying at least one or a combination of the following information of each second to-be-selected high-definition path: a total length of each second to-be-selected high-definition path, total duration of automatic driving corresponding to each second to-be-selected high-definition path, and a length difference between each second to-be-selected high-definition path and the first conventional path.

According to this design, the apparatus may display detailed information about each second to-be-selected high-definition path to the user, so that the user can further understand the foregoing high-definition paths, and the user subsequently performs path analysis, comparison, and screening.

In a possible design, after the apparatus enables the preparatory automatic driving mode in which the target high-definition path is used for path navigation, the apparatus may further perform driving control by performing the following steps:
A: If the first location is different from a start location of the 1^{st} road section in the target high-definition path, the apparatus prompts the user to enable the manual driving mode; or if the first location is the same as a start location of the 1^{st} road section in the target high-definition path, the apparatus enables the automatic driving mode.
   According to step A, the apparatus may select a proper driving mode for the user based on a current location of the vehicle and the start location of the target high-definition path, so that user experience is improved.
B: If the apparatus determines that a location of the vehicle in a traveling process is in a first range, the apparatus prompts the user to enable the automatic driving mode. The first range includes a start location of a first road section in the target high-definition path, the start location of the first road section is different from the first location, and there is no road section connected to the start location of the first road section in the target high-definition path.
   According to step B, when the apparatus can perform path navigation based on the target high-definition path, the apparatus may prompt the user to enable the automatic driving mode.
C: If the apparatus determines that a location of the vehicle in a traveling process is in a second range, the apparatus prompts the user to enable the manual driving mode. The second range includes an end location of a second road section, the end location of the second road section is different from the second location, and there is no road section connected to the end location of the second road section in the target high-definition path.

According to step C, when the apparatus cannot perform path navigation based on the second high-definition path, the apparatus may prompt the user to enable the manual driving mode.

In a possible design, after prompting the user to enable the manual driving mode, the apparatus may further prompt the user with current manual driving information, where the current manual driving information includes a current manual driving distance and/or current manual driving duration.

According to this design, the apparatus may provide the current manual driving information for the user, so that the user can prepare for current manual driving, and the user finally decides on whether to enable the manual driving mode.

In a possible design, after the apparatus prompts the user to enable the manual driving mode of the vehicle, in a process in which the vehicle enables the manual driving mode, if the apparatus determines that the location of the vehicle in the traveling process deviates from the target high-definition path, the vehicle exits the preparatory automatic driving mode.

This design can ensure that the vehicle cannot deviate from the target high-definition path in the manual driving mode, and ensure traveling safety of the vehicle.

According to a second aspect, an embodiment of this application provides a driving control apparatus, including units configured to perform the steps in the first aspect.

According to a third aspect, an embodiment of this application provides a driving control apparatus, including at least one processing element and at least one storage element. The at least one storage element is configured to store a program and data, and the at least one processing element is configured to perform the method according to the first aspect of this application.

According to a fourth aspect, an embodiment of this application further provides a computer program. When the computer program runs on a computer, the computer is enabled to perform the method according to the first aspect.

According to a fifth aspect, an embodiment of this application further provides a computer storage medium. The computer storage medium stores a computer program, and when the computer program is executed by a computer, the computer is enabled to perform the method according to the first aspect.

According to a sixth aspect, an embodiment of this application further provides a chip. The chip is configured to read a computer program stored in a memory, to perform the method according to the first aspect.

According to a seventh aspect, an embodiment of this application further provides a chip system. The chip system includes a processor, configured to support a computer apparatus in implementing the method according to the first aspect. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a schematic diagram of a conventional map and a high-definition map according to an embodiment of this application;
FIG. 2 is a schematic diagram of a conventional path and a high-definition path that partially matches the conventional path according to an embodiment of this application;
FIG. 3 is another schematic diagram of a conventional path and a high-definition path that partially matches the conventional path according to an embodiment of this application;
FIG. 4 is another schematic diagram of a conventional path and a high-definition path that partially matches the conventional path according to an embodiment of this application;
FIG. 5A is a diagram of an architecture of a vehicle according to an embodiment of this application;
FIG. 5B are a flowchart of a driving control method according to an embodiment of this application;
FIG. 6 are a flowchart of a driving control method instance according to an embodiment of this application;
FIG. 7 is a flowchart of a driving control method instance used after a preparatory automatic driving mode is enabled according to an embodiment of this application;
FIG. 8A are a flowchart of a driving control method instance according to an embodiment of this application;
FIG. 8B are a flowchart of a driving control method instance according to an embodiment of this application;
FIG. 9 is a schematic diagram of a structure of a driving control apparatus according to an embodiment of this application; and
FIG. 10 is a schematic diagram of a structure of another driving control apparatus according to an embodiment of this application.

### DESCRIPTION OF EMBODIMENTS

This application provides a driving control method and apparatus, to implement path calculation and real-time navigation broadcast by combining a high-definition map and a conventional map, thereby improving user experience. The method and the apparatus are based on a same technical concept. Because a problem-resolving principle of the method is similar to that of the apparatus, mutual reference may be made to implementation of the apparatus and the method. Repeated parts are not described in detail.

In the method provided in embodiments of this application, after obtaining a conventional path through calculation in a conventional map, the driving control apparatus may search a high-definition map for a target high-definition path that matches the conventional path. When finding the target high-definition path that completely matches the conventional path, the apparatus enables real-time navigation broadcast based on the conventional path, and enables an automatic driving mode in which the target high-definition path is used for path navigation. Because the conventional map has advantages such as rich road sections and updated real-time traffic information, a conventional path calculated in the conventional map is more proper, and performing real-time navigation broadcast based on a conventional path in the conventional map can ensure that a user receives more traffic information more accurately. Further, using a high-definition path in the high-definition map to implement automatic driving of a vehicle can reduce user operations. In conclusion, according to this solution, the apparatus can ensure automatic driving of the vehicle as much as possible, and further implement path calculation and real-time navigation broadcast by combining the high-definition map and the conventional map. This can improve user experience.

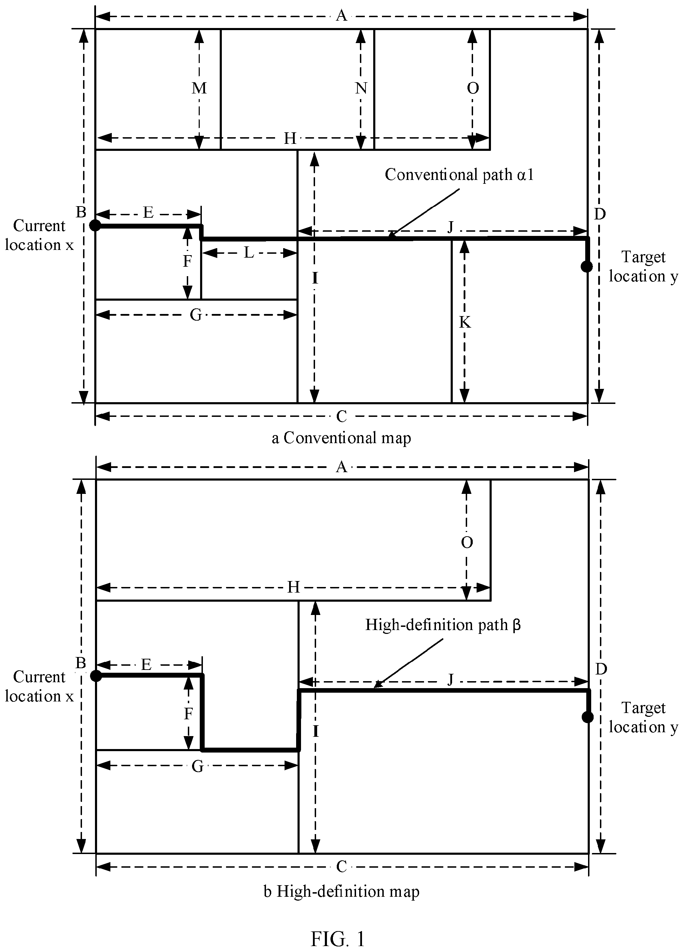

The following describes some terms in this application, to help a person skilled in the art have a better understanding.
(1) Conventional map component: The conventional map component is a software component installed in a vehicle-mounted device, and can provide a user with high-quality path calculation and real-time navigation broadcast functions, for example, a software development kit (software development kit, SDK) of a conventional map. The conventional map maintained by the conventional map component can achieve centimeter-level precision. For example, the conventional map component may be a global positioning system (global position system, GPS) navigation map component, a Baidu Maps component, or an Amap component. In addition, for ease of distinguishing and description, in embodiments of this application, a path obtained by the conventional map component through calculation in the conventional map is referred to as a conventional path.
   As shown in a in FIG. 1, a conventional map maintained by a conventional map component includes more rich and accurate road sections through long-term historical operation and maintenance record accumulation, and a developer of the conventional map component can provide accurate real-time traffic information for the conventional map component. Therefore, a conventional path calculated by the conventional map component in the conventional map has more proper route planning (less congestion, a short driving time, a smooth road condition, and a short total length), and user experience is better. For example, as shown in a in FIG. 1, when a current location of a vehicle is x, and a target location that a user expects to reach is y, a path obtained by the conventional map component through calculation is a conventional path α1 in bold and black in the figure, and is a path formed by connecting a road section E, a part of a road section F, a road section L, a road section J, and a part of a road section D.
(2) High-definition map component: The high-definition map component is a software component installed in the vehicle-mounted device in the vehicle, is directly used by an automatic driving module, and is mainly configured to provide path navigation for the automatic driving module after the vehicle enables an automatic driving mode. Certainly, the high-definition map component also has path calculation and real-time navigation broadcast functions. However, because a developer of the high-definition map component focuses on accuracy of micro objects such as lane lines and road edges and details, real-time traffic information provided for the high-definition map component may be incomplete or inaccurate, and there is a lack of long-term historical operation and maintenance record accumulation. Therefore, compared with a path calculated in a conventional map, a path calculated in a high-definition map maintained by the high-definition map component is less proper, and user experience is poorer. In addition, for ease of distinguishing and description, in embodiments of this application, a path obtained by the high-definition map component through calculation in the high-definition map is referred to as a high-definition path.
   Refer to a high-definition map shown in b in FIG. 1. Apparently, compared with the conventional map shown in a in FIG. 1, the high-definition map lacks many road sections. Still, for example, when the current location of the vehicle is x, and the target location is y, a path obtained by the high-definition map component through calculation in the high-definition map is a high-definition path β in bold and black in the figure, and is formed by connecting the road section E, the road section F, a part of a road section G, a part of a road section I, the road section J, and a part of the road section D.
   As shown in a and b in FIG. 1, when the current location of the vehicle is the same as the target location that the user expects to reach, the conventional path α1 obtained by the conventional map component through calculation is more proper than the high-definition path β obtained by the high-definition map component through calculation.
(3) Real-time navigation broadcast: Real-time navigation broadcast means that the vehicle-mounted device (the high-definition map component or the conventional map component in the vehicle-mounted device) notifies the user of information such as the current location, the real-time traffic information, and subsequent driving operations in a form of display broadcast and/or voice broadcast in the high-definition map or the conventional map based on a location of the vehicle.
(4) Automatic driving mode: The automatic driving mode is also referred to as self driving (self driving), and is a mode in which self driving is implemented by using the automatic driving module in the vehicle-mounted device. After the vehicle enables the automatic driving mode, the vehicle-mounted device in the vehicle mainly performs path navigation based on a high-definition path in the high-definition map component, and may further automatically and safely operate the vehicle by combining and relying on various real-time data transmitted by components such as artificial intelligence, visual computing, a radar, and a sensor, to enable the vehicle to travel along a high-definition path selected by the user in the high-definition map.
(5) Manual driving mode: The manual driving mode is also referred to as manual takeover in this application, and is a driving mode in which the user operates the vehicle to enable the vehicle to travel. Before the vehicle travels (for example, when or after the vehicle-mounted device performs route planning) or during automatic driving, the user may directly enable the manual driving mode through selection or setting. Alternatively, when the vehicle-mounted device prompts the user to enable the manual driving mode, the user enables the manual driving mode.
   Generally, when the vehicle starts to travel, if the vehicle-mounted device determines that a current location of the vehicle is different from a start location selected by the user in a high-definition path, the vehicle-mounted device prompts the user to enable the manual driving mode of the vehicle. When the vehicle enables the automatic driving mode to travel, and the vehicle-mounted device determines that a location of the vehicle in a traveling process is near an end location of a road section in a high-definition path (the end location is not a target location selected by the user, and there is no road section connected to the end location in the high-definition path), the vehicle-mounted device also prompts the user to enable the manual driving mode.
   Certainly, although the vehicle-mounted device prompts the user to enable the manual driving mode when the manual driving mode theoretically needs to be enabled, if the user does not set to enable the manual driving mode, the vehicle-mounted device may still transmit various real-time data for sensing and positioning by using components such as artificial intelligence, visual computing, a radar, and a sensor, to implement automatic driving in a short distance or in a short time without path navigation by the high-definition map component.
(6) Preparatory automatic driving mode: The preparatory automatic driving mode is a driving mode in which the vehicle switches between the automatic driving mode and the manual driving mode (or a combination of the two driving modes). After the vehicle enables the preparatory automatic driving mode, theoretically (or ideally), in an entire traveling process, the automatic driving mode needs to be enabled on some road sections, and the manual driving mode needs to be enabled on other road sections.
   For example, when a high-definition path selected by the user partially matches a conventional path calculated by the conventional map component, the conventional path includes two road section sets: a first road section set and a second road section set. A road section included in the first road section set completely matches a road section included in the high-definition path, but a road section included in the second road section set does not match a road section included in the high-definition path (that is, the high-definition path does not include a road section in the second road section set). Ideally, the vehicle needs to travel in the automatic driving mode on a road section included in the first road section set (the high-definition path), and the vehicle needs to travel in the manual driving mode on a road section included in the second road section set. Therefore, in the foregoing case, after the vehicle-mounted device enables the preparatory automatic driving mode of the vehicle, the vehicle-mounted device prompts the user to enable or actively enables a corresponding driving mode when driving mode switching needs to be performed theoretically according to an actual situation in the traveling process.
   For example, if the vehicle-mounted device determines that a current location at which the vehicle enables the preparatory automatic driving mode is different from a start location of the 1^{st} road section in the selected high-definition path, the vehicle-mounted device prompts the user to enable the manual driving mode of the vehicle; or if the vehicle-mounted device determines that the current location is the same as the start location of the 1^{st} road section in the selected high-definition path, the vehicle-mounted device prompts the user to enable or actively enables the automatic driving mode of the vehicle.
   For another example, if the vehicle-mounted device determines that the location of the vehicle in the traveling process is in a first range in which a start location of a first road section in the high-definition path is located, the vehicle-mounted device prompts the user to enable the automatic driving mode of the vehicle. The start location of the first road section is different from the current location, and there is no road section connected to the start location of the first road section in the second high-definition path.
   For still another example, if the vehicle-mounted device determines that the location of the vehicle in the traveling process is in a second range in which an end location of a second road section in the high-definition path is located, the vehicle-mounted device prompts the user to enable the manual driving mode of the vehicle. The end location of the second road section is different from the target location, and there is no road section connected to the end location of the second road section in the second high-definition path.
(7) Road section: The road section is used to form a map and a path. The road section is a traffic line between two adjacent traffic nodes, and is continuous without interruption. Certainly, one road section may alternatively be a plurality of shorter road sections, and a plurality of road sections (two adjacent road sections may include a same traffic node) may form a longer road section, for example, road sections A, B, C, and D shown in a and b in FIG. 1. Therefore, that road sections are the same mentioned in embodiments of this application means that traffic lines of road sections in different maps are completely the same, and traffic nodes are also the same.
(8) Path: The path is formed by sequentially arranging at least one road section between a start location and a target location, for example, the conventional path calculated in the conventional map shown in a in FIG. 1, and the high-definition path calculated in the high-definition map shown in b in FIG. 1.
   It should be noted that a path obtained by each of the conventional map component and the high-definition map component through path calculation based on the start location and the target location is generally an uninterrupted traffic line that connects the start location and the target location, for example, the path shown in a or b in FIG. 1. In addition, in some special scenarios, for example, when the high-definition map component in the vehicle-mounted device matches a conventional path with the high-definition map to attempt to search the high-definition map for a path that is the same as or most similar to the conventional path, the high-definition path found in the high-definition map may be interrupted.
(9) Path matching: Path matching specifically includes two types.

A first matching type is performed by the high-definition map component, to match a conventional path with the high-definition map to attempt to search the high-definition map for a high-definition path that is the same as or most similar to the conventional path.

A second matching type is performed by the conventional map component, to match a high-definition path with the conventional map to attempt to search the conventional map for a conventional path that is the same as or most similar to the high-definition path.

The conventional map includes richer road sections than the high-definition map. Therefore, when the high-definition map component performs the first matching type to match a conventional path obtained by the conventional map component through calculation with the high-definition map, the following three results may be generated:

A first result: The conventional path does not match the high-definition map, and the high-definition map component finds no high-definition path in the high-definition map.

A second result: The conventional path matches the high-definition map, and the high-definition map component finds a high-definition path that completely matches the conventional path in the high-definition map. Road sections included in the found high-definition path and road sections included in the conventional path are completely the same, and specifically meet all of the following conditions:
(1) A start location of the 1^{st} road section in the high-definition path is the same as a start location of the 1^{st} road section in the conventional path, that is, the 1^{st} road section in the high-definition path is the same as the 1^{st} road section in the conventional path.
(2) An end location of the last road section in the high-definition path is the same as an end location of the last road section in the conventional path, that is, the last road section in the high-definition path is the same as the last road section in the conventional path.
(3) The high-definition path is not interrupted.

A third result: The conventional path matches the high-definition map, and the high-definition map component finds a high-definition path that partially matches the conventional path. The partially matched high-definition path meets any one or more of the following conditions:
(1) A start location of the 1^{st} road section in the high-definition path is different from a start location of the 1^{st} road section in the conventional path, that is, the 1^{st} road section in the high-definition path is different from the 1^{st} road section in the conventional path.
(2) An end location of the last road section in the high-definition path is different from an end location of the last road section in the conventional path, that is, the last road section in the high-definition path is different from the last road section in the conventional path.
(3) The high-definition path is interrupted.

In conclusion, compared with a plurality of road sections included in the conventional path, the high-definition path that partially matches the conventional path lacks at least one of the road sections. For example, the high-definition path lacks the 1^{st} road section in the conventional path, or lacks the last road section in the conventional path, or lacks an intermediate road section in the conventional path. In other words, the conventional path includes two road section sets: a first road section set and a second road section set. Each road section set includes at least one road section. A road section in the first road section set completely matches a road section included in the partially matched high-definition path. A road section included in the second road section set does not match a road section included in the partially matched high-definition path.

The high-definition path that partially matches the conventional path is described below by using an example with reference to the accompanying drawings.

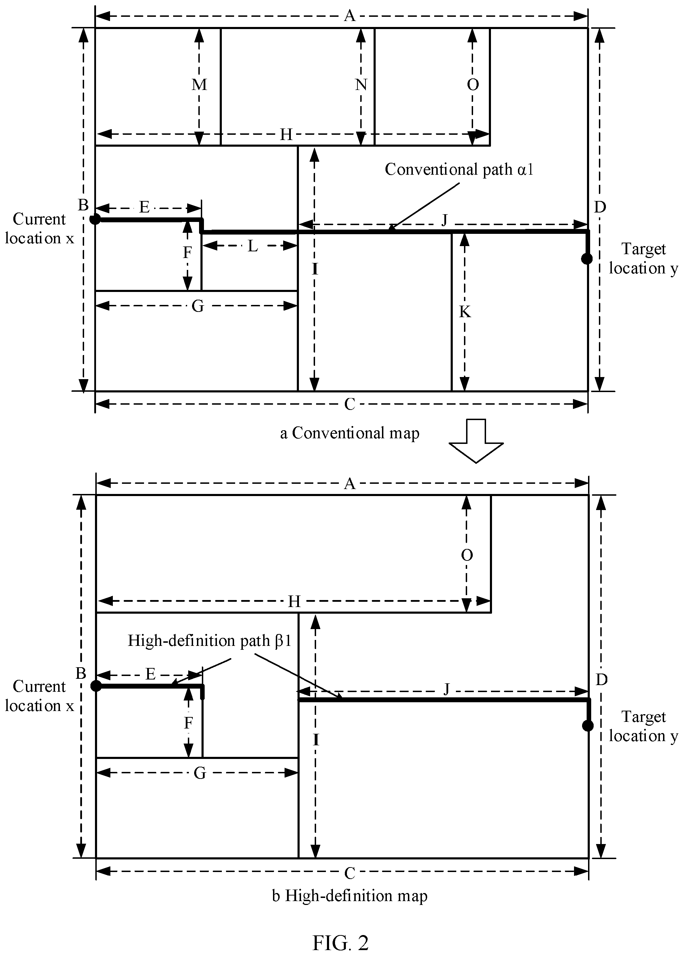

Example 1: As shown in FIG. 2, the conventional map and the high-definition map shown in FIG. 1 are still used as an example. When the high-definition map component matches the conventional path α1 calculated in the conventional map with the high-definition map to attempt to search the high-definition map for a path that is the same as or most similar to the conventional path α1, the high-definition map component finds a high-definition path β1 that partially matches the conventional path α1, as shown in FIG. 2. The high-definition path β1 is a path formed by the road section E, the part of the road section F, the road section J, and the part of the road section D. Because the high-definition map lacks the road section L, the part of the road section F and the road section J are interrupted and are not directly connected in the high-definition path β1.

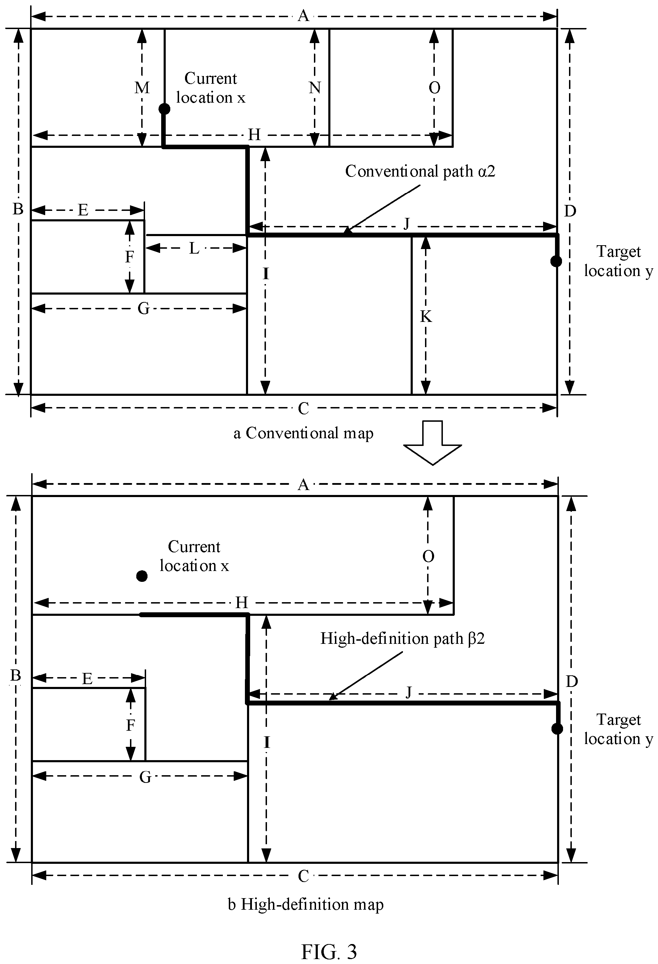

Example 2: As shown in FIG. 3, the conventional map and the high-definition map shown in FIG. 1 are still used as an example. When the current location x of the vehicle is located in a road section M, the conventional path obtained by the conventional map component through calculation is a conventional path α2 in bold and black shown in a in FIG. 3, and is a path formed by connecting a part of the road section M, a part of a road section H, a part of the road section I, the road section J, and the part of the road section D. The high-definition map component matches the conventional path α2 with the high-definition map, and finds a high-definition path β2 that partially matches the conventional path α2, as shown in b in FIG. 3. Because the high-definition map lacks the road section M, the high-definition path β2 is a path formed by connecting the part of the road section H, the part of the road section I, the road section J, and the part of the road section D. In this scenario, compared with the conventional path α2, the high-definition path β2 lacks the part of the road section M.

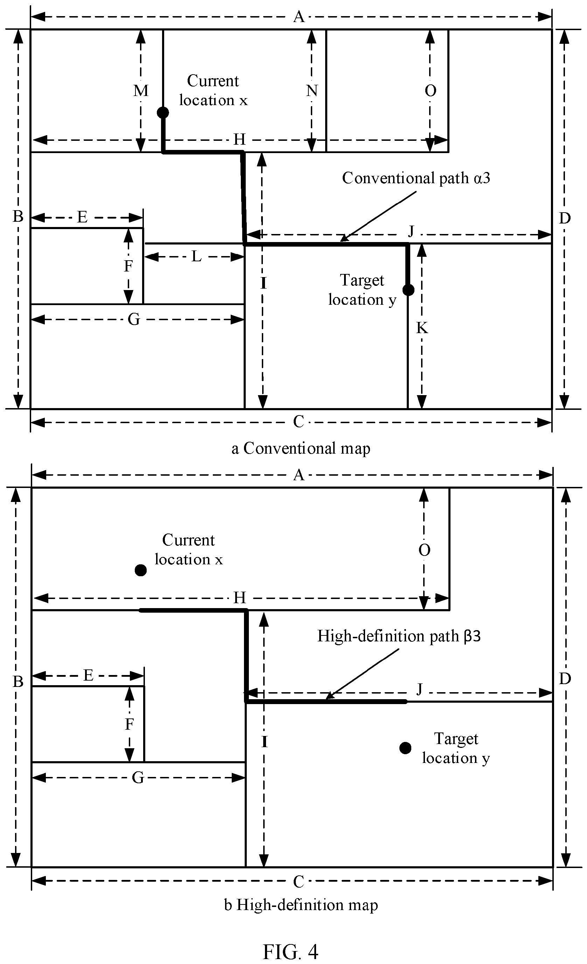

Example 3: As shown in FIG. 4, the conventional map and the high-definition map shown in FIG. 1 are still used as an example. When the current location x of the vehicle is located in a road section M, and the target location that the user expects to reach is located in a road section K, the conventional path obtained by the conventional map component through calculation is a conventional path α3 in bold and black shown in a in FIG. 4, and is a path formed by connecting a part of the road section M, a part of a road section H, a part of the road section I, a part of the road section J, and a part of the road section k. The high-definition map component matches the conventional path α3 with the high-definition map, and finds a high-definition path β3 that partially matches the conventional path α3, as shown by a bold and black path in b in FIG. 3. Because the high-definition map lacks the road section M and the road section K, the high-definition path β3 is a path formed by connecting the part of the road section H, the part of the road section I, and the part of the road section J. In this scenario, compared with the conventional path α3, the high-definition path β3 lacks the part of the road section M and the part of the road section K.

In embodiments of this application, the vehicle-mounted device implements real-time navigation broadcast by using a conventional path in the conventional map. Therefore, the conventional path used as a basis for real-time navigation broadcast needs to be completely consistent with a to -be-matched high-definition path. Based on this reason, in embodiments of this application, when the conventional map component performs the second matching type to match a high-definition path obtained by the high-definition map component through calculation with the conventional map, the following two results may be generated:

A first result: The high-definition path does not match the conventional map, and the conventional map component finds no conventional path in the conventional map.

A second result: The high-definition path matches the conventional map, and the conventional map component finds a conventional path that completely matches the high-definition path in the conventional map. Road sections included in the found conventional path and road sections included in the high-definition path are completely the same, and specifically meet all of the following conditions:
(1) A start location of the 1^{st} road section in the conventional path is the same as a start location of the 1^{st} road section in the high-definition path, that is, the I^{s1} road section in the conventional path is the same as the 1^{st} road section in the high-definition path.
(2) An end location of the last road section in the conventional path is the same as an end location of the last road section in the high-definition path, that is, the last road section in the high-definition path is the same as the last road section in the high-definition path.
(3) The conventional path is not interrupted.

(10) "a plurality of': "a plurality of" means two or more.

(11) "at least one": "at least one" means one or more.

(12) "and/or": "and/or" describes an association relationship between associated objects and represents that three relationships may exist. For example, A and/or B may represent the following three cases: Only A exists, both A and B exist, and only B exists. A character "/" generally indicates an "or" relationship between the associated objects.

In addition, it should be understood that, in descriptions of this application, terms such as "first" and "second" are merely used for distinguishing and description, but should not be understood as an indication or implication of relative importance, or should not be understood as an indication or implication of a sequence.

The following describes in detail embodiments of this application with reference to accompanying drawings.

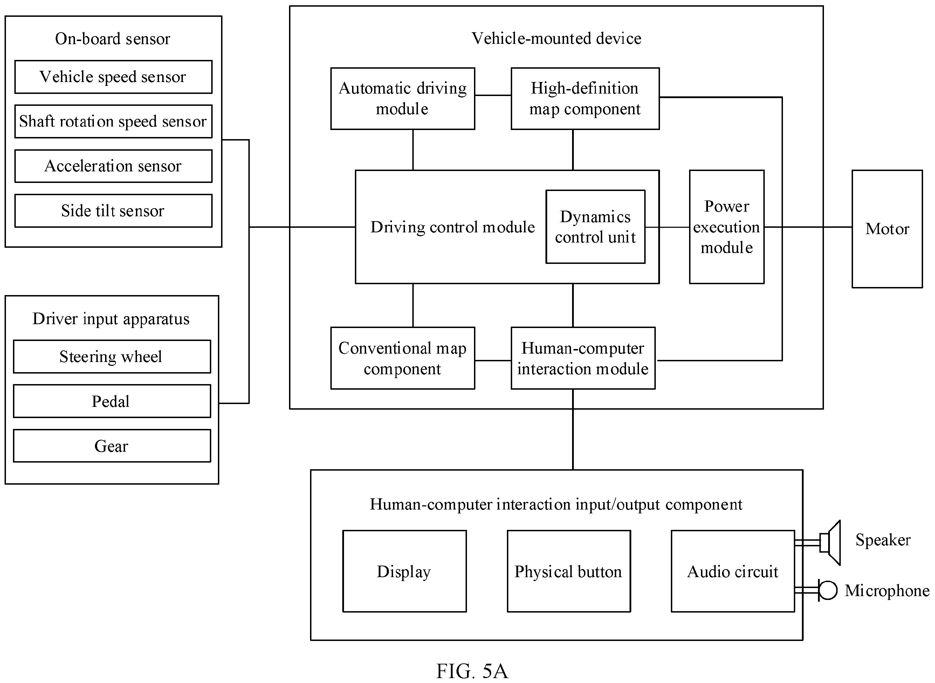

The driving control method provided in embodiments of this application may be applied to a vehicle that can implement automatic driving. Specifically, the method may be carried in a separate vehicle-mounted device by using software. The vehicle-mounted device may also be referred to as a vehicle-mounted electronic device, a vehicle-mounted computer, a driving control apparatus, a driving control device, or the like. This is not limited in this application. As shown in a diagram of an architecture of a vehicle shown in FIG. 5A, the vehicle may include an on-board sensor, a driver input apparatus, a vehicle-mounted device, a human-computer interaction input/output apparatus, a motor, and the like. The following describes the components in the vehicle.

The on-board sensor is configured to collect various sensor data of the vehicle in real time. As shown in the figure, some examples of the on-board sensor are a vehicle speed sensor, a shaft rotation speed sensor, a wheel speed sensor, an acceleration sensor, a side tilt sensor, and the like. The vehicle speed sensor can measure a speed of the vehicle in a specified direction. The shaft rotation speed sensor can measure a rotation speed of a motor shaft. The wheel speed sensor can measure a rotation speed of a wheel of the vehicle. The acceleration sensor can measure an acceleration of the vehicle in a specified direction. The side tilt sensor can measure a side tilt angle of the vehicle.

The driver input apparatus is operated by a driver (referred to as a user for short below) when the vehicle is in a manual driving mode, may specifically include a steering wheel, a throttle pedal, a brake pedal, a manual gear joystick, an automatic gear controller, and the like, and is configured to receive a driving intent of the user and generate corresponding input data. For example, after the user operates the steering wheel, the steering wheel generates a steering wheel angle.

The human-computer interaction input/output apparatus is a component configured to implement interaction and communication between the user and the vehicle for mutual understanding and recognition, to implement human-computer interaction. As shown in the figure, the human-computer interaction input/output apparatus may include but is not limited to a display, a physical button, an audio circuit, and the like.

The display may be a touch display. The display can not only present content such as a user interface or a multimedia file play interface, but also can collect a touch operation performed by the user on or near the display, generate corresponding touch information, and send the touch information to the vehicle-mounted device, so that the vehicle-mounted device executes an instruction corresponding to the touch information. For example, when the vehicle enables a real-time navigation broadcast function, a conventional map (including a conventional path) or a high-definition map (including a high-definition path) and some real-time traffic information may be displayed on the display. For another example, when the vehicle-mounted device obtains a plurality of paths through path calculation, the vehicle-mounted device may display the plurality of paths and path information of each path on the display to prompt the user to select a target path. For another example, in a traveling process of the vehicle, when the vehicle-mounted device determines that driving mode switching needs to be performed, the vehicle-mounted device may display prompt information on the display to prompt the user.

The physical button may collect a button operation of the user, generate button information, and send the button information to the vehicle-mounted device, so that the vehicle-mounted device executes a command corresponding to the button information.

The audio circuit includes a speaker and a microphone, and may provide an audio interface between the user and the vehicle-mounted device. The audio circuit may convert audio data received from the vehicle-mounted device into an electrical signal and transmit the electrical signal to the speaker, and the speaker converts the electrical signal into an audio signal (for example, a sound wave) for output. In addition, the microphone may convert a collected audio signal into an electrical signal, and the audio circuit receives the electrical signal and then converts the electrical signal into audio data for further processing such as transmission, analysis, or storage. Optionally, the audio circuit may further include a headset interface, configured to connect to a wired headset.

The speaker, also referred to as a "horn" or a "speaker box", is configured to: convert an electrical signal that carries audio data into an audio signal, and output the audio signal. For example, the vehicle -mounted device may play music and perform broadcast by using the speaker, and send voice information such as various voice prompts when the vehicle-mounted device enables real-time navigation broadcast.

The microphone, also referred to as a "mike" or a "microphone", is configured to: collect an audio signal (for example, a sound made by the user) in an environment around the vehicle-mounted device, and convert the audio signal into an electrical signal that carries the audio signal. For example, the microphone may collect an audio signal related to an operation such as selection of a target path that is spoken by the user.

The motor can generate, based on a torque control command sent by the vehicle-mounted device or based on input data entered by the user by using the driver input apparatus, corresponding torque as a power source for vehicle traveling.

The vehicle-mounted device can implement a plurality of functions such as real-time navigation broadcast, path navigation, driving control, positioning, a network function, an information indication, entertainment, security protection, and vehicle stability control, and can meet various requirements of the user for navigation, daily affairs processing, entertainment, and the like. It should be noted that the foregoing functions may be integrated into one vehicle-mounted device, or distributed in a plurality of vehicle-mounted devices, but the plurality of vehicle-mounted devices may communicate and interact with each other to obtain data for implementing corresponding functions of the plurality of vehicle-mounted devices.

As a control center of the vehicle, the vehicle-mounted device may be connected to another component through various interfaces and lines, and perform various functions of the vehicle-mounted device by running or executing a software program and/or a module stored in an internal memory and invoking data stored in the memory. For example, in embodiments of this application, based on a specific logical function of the vehicle-mounted device, the vehicle-mounted device may be divided into the following modules: an automatic driving module, a high-definition map component, a driving control module, a power execution module, a human-computer interaction module, and a conventional map component.

The automatic driving module is configured to: when the vehicle enables an automatic driving mode, perform path navigation based on a high-definition map; transmit various real-time data by using components such as artificial intelligence, visual computing, a radar, and the on-board sensor; automatically detect a steering requirement and a braking/driving requirement of the vehicle based on a current traveling status of the vehicle; and control maneuverability and stability of the vehicle by using the driving control module, so that the vehicle automatically and safely travels along a high-definition path selected by the user in the high-definition map. The automatic driving module may be integrated with an advanced driver assistance system (advanced driver assistance system, ADAS), an electronic stability program (electronic stability program, ESP), and the like, to ensure safety and stability of the vehicle in an automatic driving process.

The high-definition map component maintains a high-definition map, and is configured to provide path navigation for the automatic driving module based on a high-definition path in the high-definition map. The high-definition map component also has path calculation and real-time navigation broadcast functions.

The conventional map component maintains a conventional map, and is configured to provide high-quality path calculation and real-time navigation broadcast functions for the user based on a conventional map. Compared with the high-definition map component, the conventional map component has long-term historical operation and maintenance record long-term accumulation and real-time traffic information update functions. Therefore, the conventional map maintained by the conventional map component has obviously rich and accurate road sections, and a conventional path calculated by the conventional map component has more proper route planning and more accurate and richer real-time navigation broadcast.

The driving control module is used as a control center of the vehicle-mounted device, and can properly arrange a driving mode of the vehicle. In different driving modes, the driving control module may obtain various data from the on-board sensor, the driver input apparatus, and another module in the vehicle-mounted device, and process the obtained data, to implement the driving control method provided in embodiments of this application and control vehicle maneuverability and stability.

As shown in the figure, the driving control module has a dynamics control function, and can control traveling and stability of the vehicle. Further, the driving control module may include a dynamics control function unit, configured to: calculate a vehicle control value based on a traveling status of the vehicle, and convert the control value into a driving/braking torque requirement.

The power execution module is configured to generate a torque control command and send the torque control command to the motor according to a driving/braking torque requirement of the dynamics control unit in the driving control module.

The human-computer interaction module is connected to the human-computer interaction input/output apparatus of the vehicle for communication and interaction. Specifically, the human-computer interaction module receives an instruction that is input by the human-computer interaction input/output apparatus, and feeds back the instruction to the driving control module to perform an operation corresponding to the instruction; and receives an interaction command that is output by the driving control module, sends the interaction command to the human-computer interaction input/output component, and displays or prompts the interaction command to the user by using the display, the audio circuit, or the like.

A person skilled in the art may understand that the structure of the vehicle-mounted device shown in FIG. 5A does not constitute a limitation on the vehicle-mounted device. The vehicle-mounted device provided in this embodiment of this application may include more or fewer components than those shown in the figure, or may combine some components, or may have different component arrangements. For example, the vehicle-mounted device may further include a wireless communications module, a communications interface, a human-computer interaction input/output component, and the like. The vehicle may further include another apparatus and component. This is not limited in this application either.

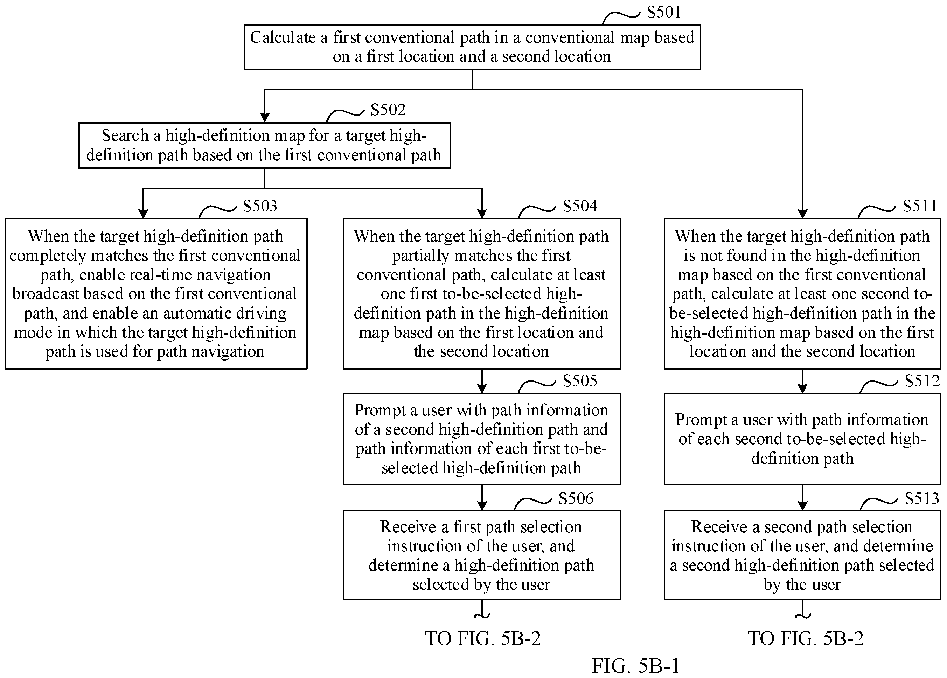

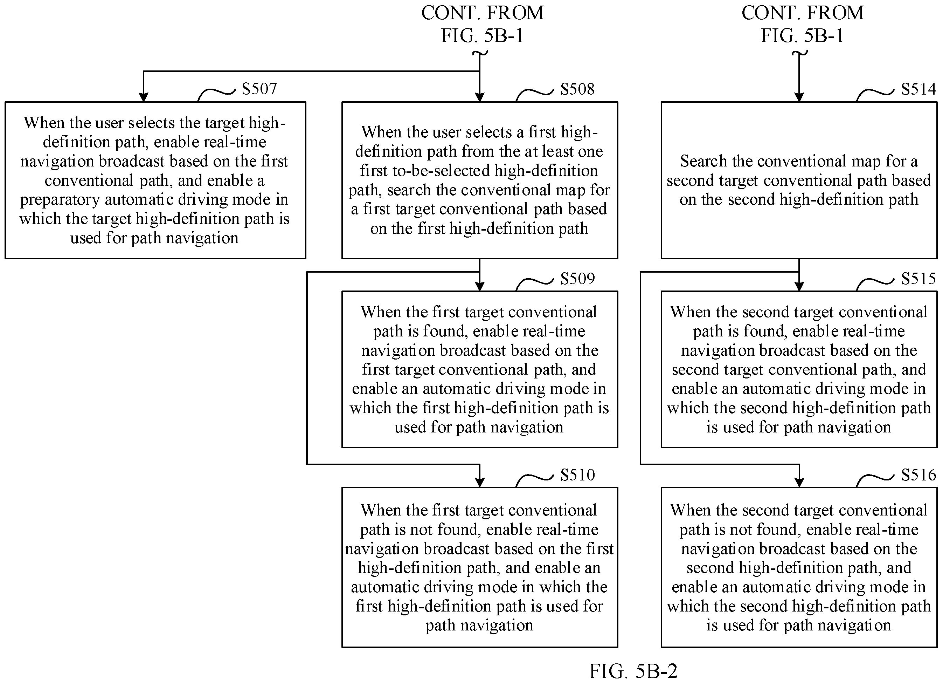

An embodiment of this application provides a driving control method. The method may be performed by the vehicle-mounted device that controls the driving mode of the vehicle shown in FIG. 5A. The following describes a procedure of the driving control method provided in this embodiment of this application with reference to the driving control method shown in FIG. 5B.

S501: The vehicle-mounted device calculates a first conventional path in a conventional map based on a first location (a start location of the vehicle, for example, a current location) and a second location (an end location of the vehicle, for example, a target location that a user expects to reach).

Because the conventional map has rich and accurate road sections and the conventional map can obtain updated real-time traffic information, the first conventional path obtained through calculation in the conventional map is a path with most proper path planning currently, that is, the first conventional path meets the following characteristics: less congestion, a short driving time, a smooth road condition, and a short total length.

S502: The vehicle-mounted device searches a high-definition map based on the first conventional path for a target high-definition path that matches the first conventional path, and the vehicle-mounted device finds the target high-definition path in the high-definition map based on the first conventional path.

According to this step, the vehicle-mounted device attempts to search the high-definition map for a high-definition path, as a path navigation basis for automatic driving, that is the same as or most similar to the first conventional path, so that the vehicle-mounted device performs real-time navigation broadcast based on the first conventional path as much as possible, and performs automatic driving based on the high-definition path that matches the first conventional path, so as to enable the vehicle to use an automatic driving mode as much as possible, and further implement path calculation and real-time navigation broadcast by using the conventional map. This can improve user experience.

It can be learned from the foregoing descriptions of the first matching type in path matching that, in this embodiment of this application, the target high-definition path that matches the first conventional path may meet any one of the following conditions:
Condition 1: The target high-definition path completely matches the first conventional path. In other words, the first conventional path and the first high-definition path include a same road section.
Condition 2: The target high-definition path partially matches the first conventional path. In other words, the target high-definition path includes fewer road sections than the first conventional path. For example, the target high-definition path may lack the 1^{st} road section, the last road section, or an intermediate road section in the first conventional path.

S503: When the target high-definition path and the first conventional path include a same road section, the vehicle-mounted device enables real-time navigation broadcast based on the first conventional path, and enables an automatic driving mode in which the target high-definition path is used for path navigation.

According to the foregoing step, when obtaining the target high-definition path that completely matches the first conventional path, the vehicle-mounted device may perform real-time navigation broadcast based on the first conventional path, and perform automatic driving based on the target high-definition path that completely matches the first conventional path, so as to ensure that the vehicle uses an automatic driving mode, and further implement path calculation and real-time navigation broadcast by using the conventional map. This can improve user experience.

S504: When the target high-definition path includes fewer road sections than the first conventional path, the vehicle-mounted device calculates at least one first to-be-selected high-definition path in the high-definition map based on the first location and the second location.

For example, as shown in FIG. 2 to FIG. 4, the target high-definition path may lack the 1^{st} road section, the last road section, or the intermediate road section in the first conventional path.

The first conventional path is a traffic route with optimal path planning, but each first to-be-selected high-definition path obtained by the vehicle-mounted device by performing path calculation again in the high-definition map is not similar to or is slightly similar to the first conventional path. Therefore, actually, a detour, a relatively long driving time, a relatively long total length, or the like may exist for each first to-be-selected high-definition path.

S505: The vehicle-mounted device displays the high-definition map on a display, displays the target high-definition path in the high-definition map, and displays at least one or a combination of the following information: a start location of the target high-definition path, an end location of the target high-definition path, each manual driving duration, each manual driving distance, each automatic driving duration, each automatic driving distance, total manual driving duration, a total manual driving distance, total automatic driving duration, and a total automatic driving distance; and the vehicle-mounted device displays each first to-be-selected high-definition path in the high-definition map, and displays at least one or a combination of the following information of each first to -be-selected high-definition path: a total length of each first to-be-selected high-definition path, total duration of automatic driving corresponding to each first to-be-selected high-definition path, and a length difference between each first to-be-selected high-definition path and the first conventional path.

According to this step, the vehicle-mounted device may prompt the user with path information of the target high-definition path and each first to-be-selected high-definition path, so that the user can make a selection by comprehensively considering the foregoing information.

S506: The vehicle-mounted device may receive a first path selection instruction of the user from a human-computer interaction input/output component such as the display, an audio circuit, or a physical button by using the internal human-computer interaction module, and determine, according to the first path selection instruction, a high-definition path selected by the user from the second high-definition path and the at least one first to-be-selected high-definition path.

S507: When determining, according to the first path selection instruction, that the user selects the target high-definition path, the vehicle-mounted device enables the real-time navigation broadcast based on the first conventional path, and enables a preparatory automatic driving mode in which the target high-definition path is used for path navigation, where the preparatory automatic driving mode is a driving mode in which the vehicle switches between an automatic driving mode and a manual driving mode.

As mentioned above, although the target high-definition path is a partially matched path and lacks some road sections when being compared with the first conventional path, there is a relatively high probability that the target high-definition path is actually the same as the first conventional path. Therefore, if the user selects to use the target high-definition path, theoretically, using the manual driving mode on the lacked road sections has higher traveling safety. Therefore, the vehicle-mounted device may use the preparatory automatic driving mode, to prompt the user to use the manual driving mode for driving on the lacked road sections and use the automatic driving mode for driving on the road sections included in the second high-definition path.

In conclusion, according to the foregoing step, the vehicle-mounted device may perform real-time navigation broadcast based on the first conventional path, and perform preparatory automatic driving based on the target high-definition path that partially matches the first conventional path, so as to ensure that the vehicle uses the automatic driving mode as much as possible, and further implement path calculation and real-time navigation broadcast by using the conventional map. This can improve user experience.

S508: When determining, according to the first path selection instruction, that the user selects a first high-definition path from the at least one first to-be-selected high-definition path, the vehicle-mounted device searches the conventional map based on the first high-definition path for a first target conventional path that completely matches the first high-definition path, where the first target conventional path and the first high-definition path include a same road section.

Because the first high-definition path and the first conventional path have different routes, if the vehicle automatically travels based on the first high-definition path, the vehicle-mounted device cannot perform real-time navigation broadcast based on the first conventional path. To improve user experience, a conventional path is used as a basis for real-time navigation broadcast as much as possible, and the vehicle-mounted device may match the first high-definition path with the conventional map to attempt to search the conventional map for a conventional path, a basis for real-time navigation broadcast, that completely matches the first high-definition path.

S509: When finding the first target conventional path that completely matches the first high-definition path in the conventional map, the vehicle-mounted device enables real-time navigation broadcast based on the first target conventional path, and enables an automatic driving mode in which the first high-definition path is used for path navigation.

According to the foregoing step, when finding the first target conventional path that completely matches the first high-definition path in the conventional map, the vehicle-mounted device may perform real-time navigation broadcast based on the first target conventional path, and perform automatic driving based on the first high-definition path. In this way, although a detour, a long driving time, or the like may exist for the first high-definition path, the vehicle-mounted device can ensure that the vehicle uses a full-process automatic driving mode, and further implement real-time navigation broadcast by using the conventional map. This can still ensure user experience.

S510: When the vehicle-mounted device does not find the first target conventional path that completely matches the first high-definition path in the conventional map, the vehicle-mounted device enables real-time navigation broadcast based on the first high-definition path, and enables an automatic driving mode in which the first high-definition path is used for path navigation.

According to the foregoing step, when determining that the first target conventional path that matches the first high-definition path cannot be found in the conventional map, the vehicle-mounted device performs real-time navigation broadcast and automatic driving by using the first high-definition path, to ensure that the vehicle uses a full-process automatic driving mode. In addition, the vehicle-mounted device performs real-time navigation broadcast by using the first high-definition path, so that a real-time navigation broadcast requirement of the user can also be basically ensured, and finally user experience can also be ensured.

S511: The vehicle-mounted device searches a high-definition map based on the first conventional path for a target high-definition path that matches the first conventional path, the vehicle-mounted device does not find the target high-definition path in the high-definition map based on the first conventional path, and the vehicle-mounted device calculates at least one second to-be-selected high-definition path in the high-definition map based on the first location and the second location.

The first conventional path is a traffic route with optimal path planning, but each second to-be-selected high-definition path obtained by the vehicle-mounted device by performing path calculation again in the high-definition map is not similar to or is slightly similar to the first conventional path. Therefore, actually, a detour, a relatively long driving time, a relatively long total length, or the like may exist for each second to-be-selected high-definition path.

S512: The vehicle-mounted device displays the high-definition map on the display, displays each second to-be-selected high-definition path in the high-definition map, and displays at least one or a combination of the following information: a total length of each second to-be-selected high-definition path, total duration of automatic driving corresponding to each second to-be-selected high-definition path, and a length difference between each second to-be-selected high-definition path and the first conventional path.

According to this step, the vehicle-mounted device may prompt the user with path information of each second to-be-selected high-definition path, so that the user can make a selection by comprehensively considering the foregoing information.

S513: The vehicle-mounted device may receive a second path selection instruction of the user from a human-computer interaction input/output component such as the display, an audio circuit, or a physical button by using the internal human-computer interaction module, and determine, according to the second path selection instruction, a second high-definition path selected by the user from the at least one second to-be-selected high-definition path.

S514: The vehicle-mounted device searches the conventional map based on the second high-definition path for a second target conventional path that completely matches the second high-definition path, where the second target conventional path and the second high-definition path include a same road section.

Because the second high-definition path and the first conventional path have different routes, if the vehicle automatically travels based on the second high-definition path, the vehicle-mounted device cannot perform real-time navigation broadcast based on the first conventional path. To improve user experience, a conventional path is used as a basis for real-time navigation broadcast as much as possible, and the vehicle-mounted device may match the second high-definition path with the conventional map to attempt to search the conventional map for a conventional path, as a basis for real-time navigation broadcast, that completely matches the second high-definition path.

S515: When finding the second target conventional path that completely matches the second high-definition path in the conventional map, the vehicle-mounted device enables real-time navigation broadcast based on the second target conventional path, and enables an automatic driving mode in which the second high-definition path is used for path navigation.

According to the foregoing step, when finding the second target conventional path that completely matches the second high-definition path in the conventional map, the vehicle-mounted device may perform real-time navigation broadcast based on the second target conventional path, and perform automatic driving based on the second high-definition path. In this way, although a detour, a long driving time, or the like may exist for the second high-definition path, the vehicle-mounted device can ensure that the vehicle uses a full-process automatic driving mode, and further implement real-time navigation broadcast by using the conventional map. This can still ensure user experience.

S516: When the vehicle-mounted device does not find the second target conventional path that completely matches the second high-definition path in the conventional map, the vehicle-mounted device enables real-time navigation broadcast based on the second high-definition path, and enables an automatic driving mode in which the second high-definition path is used for path navigation.

According to the foregoing step, when determining that the second target conventional path that matches the second high-definition path cannot be found in the conventional map, the vehicle-mounted device performs real-time navigation broadcast and automatic driving by using the second high-definition path, to ensure that the vehicle uses a full-process automatic driving mode. In addition, the vehicle-mounted device performs real-time navigation broadcast by using the second high-definition path, so that a real-time navigation broadcast requirement of the user can also be basically ensured, and finally user experience can also be ensured.

In the driving control method provided in this embodiment of this application, after obtaining a conventional path through calculation in the conventional map, the vehicle-mounted device may search the high-definition map for a target high-definition path that matches the conventional path. When finding the target high-definition path that completely matches the conventional path, the vehicle-mounted device enables real-time navigation broadcast based on the conventional path, and enables an automatic driving mode in which the target high-definition path is used for path navigation. Because the conventional map has advantages such as rich road sections and updated real-time traffic information, a conventional path calculated in the conventional map is more proper, and performing real-time navigation broadcast based on a conventional path in the conventional map can ensure that the user receives more traffic information more accurately. Further, using a high-definition path in the high-definition map to implement automatic driving of the vehicle can reduce user operations. In conclusion, according to this solution, the apparatus can ensure automatic driving of the vehicle as much as possible, and further implement path calculation and real-time navigation broadcast by combining the high-definition map and the conventional map. This can improve user experience.

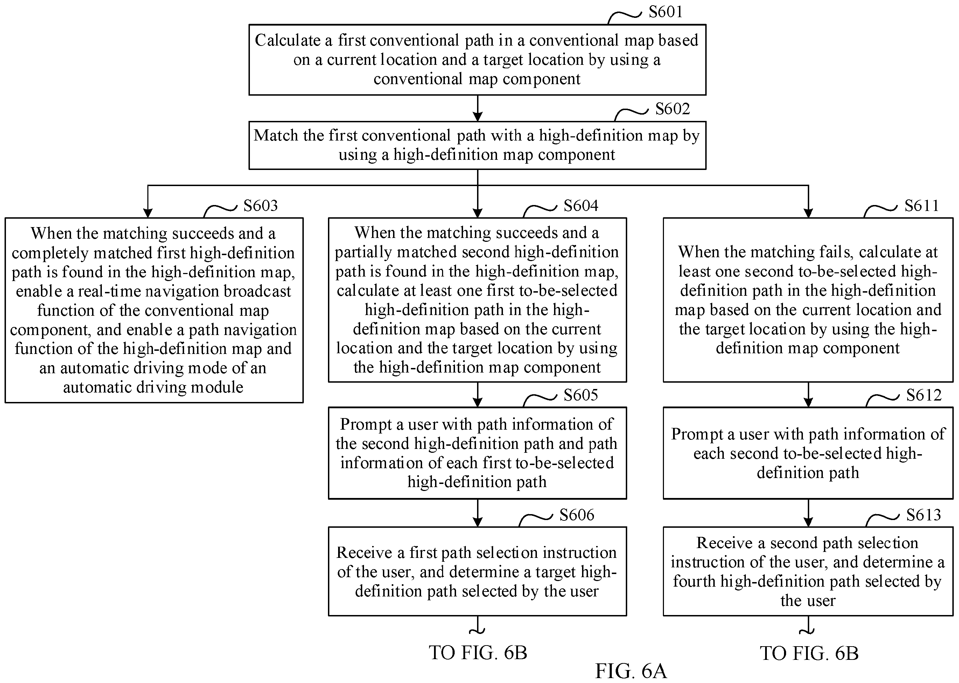

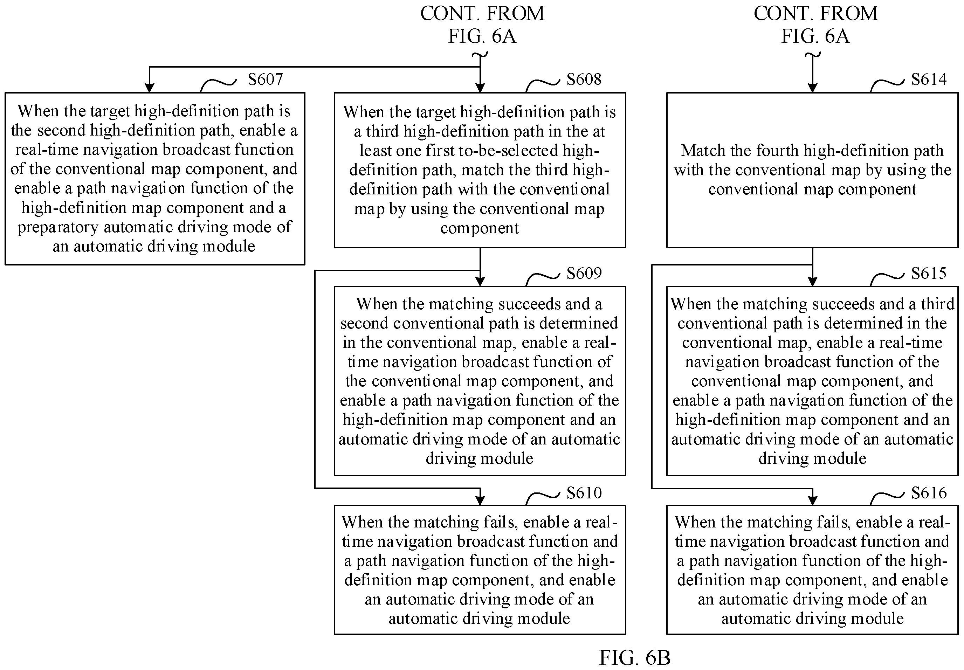

According to the driving method provided in the foregoing embodiment, an embodiment of this application further provides a driving control method instance. The following describes the instance by using the vehicle-mounted device in the vehicle shown in FIG. 5A as an example. As shown in FIG. 5A, the vehicle-mounted device includes modules such as a driving control module, an automatic driving module, a human-computer interaction module, a conventional map component, and a high-definition map component. The conventional map component is configured to perform path calculation and real-time navigation broadcast based on a conventional map. The high-definition map component is configured to: provide the vehicle in an automatic driving mode with path navigation based on a high-definition map, and perform path calculation and real-time navigation broadcast based on the high-definition map. As shown in FIG. 6, the method specifically includes the following steps.

S601: The driving control module calculates a first conventional path in the conventional map by using the conventional map component based on a current location of the vehicle and a target location that a user expects to reach. The target location may be entered by the user into the vehicle-mounted device, or may be determined by the driving control module based on a historical traveling record of the vehicle. This is not limited in this application. The driving control module may start to execute this solution after receiving a path planning request of the user by using the human-computer interaction module.

Because the conventional map has rich and accurate road sections and the conventional map component can update real-time traffic information, the first conventional path obtained by the conventional map component through calculation is a path with most proper path planning currently, that is, the first conventional path meets the following characteristics: less congestion, a short driving time, a smooth road condition, and a short total length.

S602: The driving control module matches the first conventional path with the high-definition map by using the high-definition map component.

Specifically, the driving control module may input the first conventional path obtained by the conventional map component into the high-definition map component, and the high-definition map component performs path matching.

According to this step, the driving control module attempts to search the high-definition map for a high-definition path, as a path navigation basis for automatic driving, that is the same as or most similar to the first conventional path, so that the driving control module performs real-time navigation broadcast based on the first conventional path as much as possible, and performs automatic driving based on the high-definition path that completely matches the first conventional path, so as to enable the vehicle to use an automatic driving mode as much as possible, and further implement path calculation and real-time navigation broadcast by using the conventional map. This can improve user experience.

It can be learned from the foregoing descriptions of the first matching type in path matching that, in this embodiment of this application, after the driving control module performs S602 by using the high-definition map component, three results may be generated:

A first result: The first conventional path matches the high-definition map, and the high-definition map component finds a first high-definition path that completely matches the first conventional path. The first conventional path and the first high-definition path include a same road section.

A second result: The first conventional path matches the high-definition map, and the high-definition map component finds a second high-definition path that partially matches the first conventional path. The second high-definition path includes fewer road sections than the first conventional path. For example, the second high-definition path may lack the 1^{st} road section, the last road section, or an intermediate road section in the first conventional path.

A third result: The first conventional path does not match the high-definition map, and the high-definition map component does not find a high-definition path that is the same as or similar to the first conventional path.

S603: When determining that a path matching result obtained in S602 is the first result, that is, when determining that the high-definition map component finds the first high-definition path that completely matches the first conventional path in the high-definition map, the driving control module enables a real-time navigation broadcast function of the conventional map component, so that the conventional map component can perform real-time navigation broadcast based on the first conventional path; and enables a path navigation function of the high-definition map component and an automatic driving mode of the automatic driving module, so that the automatic driving module can perform automatic driving by using the first high-definition path for path navigation.

According to the foregoing step, when obtaining the first high-definition path that completely matches the first conventional path, the driving control module may perform real-time navigation broadcast based on the first conventional path, and perform automatic driving based on the first high-definition path that completely matches the first conventional path, so as to ensure that the vehicle uses an automatic driving mode, and further implement path calculation and real-time navigation broadcast by using the conventional map. This can improve user experience.

S604: When determining that a path matching result obtained in S602 is the second result, that is, when determining that the high-definition map component finds the second high-definition path that partially matches the first conventional path in the high-definition map, the driving control module calculates at least one first to-be-selected high-definition path in the high-definition map based on the current location and the target location by using the high-definition map component.

The second high-definition path includes fewer road sections than the first conventional path, for example, as shown in FIG. 2 to FIG. 4.

The first conventional path is a traffic route with optimal path planning, but each first to-be-selected high-definition path obtained by the high-definition map component by performing path calculation again is not similar to or is slightly similar to the first conventional path. Therefore, actually, a detour, a relatively long driving time, a relatively long total length, or the like may exist for each first to-be-selected high-definition path.

S605: The driving control module may prompt the user with path information of the second high-definition path and path information of each of the at least one first to-be-selected high-definition path through displaying on a display and/or voice prompting.

In an implementation, the driving control module may prompt the user with the path information of the second high-definition path through displaying on the display. Because the second high-definition path is a partially matched path and lacks some road sections when being compared with the first conventional path, assuming that the user selects the second high-definition path for driving, the lacked road sections may require the vehicle to travel in a manual driving mode, that is, the second high-definition path cannot implement full-process automatic driving of the vehicle. Therefore, the user needs to be reminded, so that the user can comprehensively consider the foregoing case and then select a target high-definition path.

The driving control module may prompt the path information of the second high-definition path by performing the following steps:

The driving control module displays the high-definition map on the display by using the human-computer interaction module, displays the second high-definition path in the high-definition map, and displays at least one or a combination of the following information:
a start location of the second high-definition path, an end location of the second high-definition path, each manual driving duration, each manual driving distance, each automatic driving duration, each automatic driving distance, total manual driving duration, a total manual driving distance, total automatic driving duration, and a total automatic driving distance.

The path information of the second high-definition path is displayed, so that the user can further understand the second high-definition path, to facilitate subsequent target high-definition path comparison and screening.

Optionally, the driving control module may alternatively display only the second high-definition path in the high-definition map, and prompt the user with the foregoing information about the second high-definition path through voice prompting. In this way, the driving control module may prompt the user with the path information of the second high-definition path by using a combination of displaying and voice prompting.

In an implementation, the driving control module may prompt the user with the path information of each first to-be-selected high-definition path through displaying on the display, which may specifically include the following steps:

The driving control module displays each first to-be-selected high-definition path in the high-definition map by using the human-computer interaction module, and displays at least one or a combination of the following information of each first to-be-selected high-definition path:
a total length of each first to-be-selected high-definition path, total duration of automatic driving corresponding to each first to-be-selected high-definition path, and a length difference between each first to-be-selected high-definition path and the first conventional path.

Because each first to-be-selected high-definition path is less similar to the first conventional path when being compared with the second high-definition path, a detour, a relatively long driving time, a relatively long total length, or the like may exist for each first to-be-selected high-definition path. Therefore, the driving control module may display the foregoing information about each first to-be-selected high-definition path to the user, so that the user can further understand each first to-be-selected high-definition path, and the user subsequently performs path analysis, comparison, and screening.

Optionally, the driving control module may alternatively display only each first to-be-selected high-definition path in the high-definition map, and prompt the user with the foregoing information about each first to-be-selected high-definition path through voice prompting. In this way, the driving control module may prompt the user with the path information of each first to-be-selected high-definition path by using a combination of displaying and voice prompting.

S606: The driving control module may receive a first path selection instruction of the user from a human-computer interaction input/output component such as the display, an audio circuit, or a physical button by using the internal human-computer interaction module, and determine, according to the first path selection instruction, a target high-definition path selected by the user from the second high-definition path and the at least one first to-be-selected high-definition path, where the target high-definition path may be the second high-definition path or any first to-be-selected high-definition path.

S607: When the target high-definition path is the second high-definition path, the driving control module enables a real-time navigation broadcast function of the conventional map component, so that the conventional map component can perform real-time navigation broadcast based on the first conventional path; and enables a path navigation function of the high-definition map component and a preparatory automatic driving mode of the automatic driving module, so that the automatic driving module can perform automatic driving by using the second high-definition path for path navigation, where the preparatory automatic driving mode is a driving mode in which the vehicle switches between an automatic driving mode and a manual driving mode.

As mentioned above, although the second high-definition path is a partially matched path and lacks some road sections when being compared with the first conventional path, there is a relatively high probability that the second high-definition path is actually the same as the first conventional path. Therefore, if the user selects to use the second high-definition path, theoretically, using the manual driving mode on the lacked road sections has higher traveling safety. Therefore, the driving control module may enable the preparatory automatic driving mode, to prompt the user to use the manual driving mode for driving on the lacked road sections and use the automatic driving mode for driving on the road sections included in the second high-definition path.

In conclusion, according to the foregoing step, the driving control module may perform real-time navigation broadcast based on the first conventional path, and perform preparatory automatic driving based on the second high-definition path that partially matches the first conventional path, so as to ensure that the vehicle uses the automatic driving mode as much as possible, and further implement path calculation and real-time navigation broadcast by using the conventional map. This can improve user experience.

S608: When the target high-definition path is a third high-definition path in the at least one first to-be-selected high-definition path, the driving control module matches the third high-definition path with the conventional map by using the conventional map component.

Because the third high-definition path and the first conventional path have different routes, if the target high-definition path selected by the user is the third high-definition path, the driving control module cannot perform real-time navigation broadcast based on the first conventional path. To improve user experience, a conventional path is used as a basis for real-time navigation broadcast as much as possible, and the driving control module may match the third high-definition path with the conventional map to attempt to search the conventional map for a conventional path, as a basis for real-time navigation broadcast, that completely matches the third high-definition path.

It can be learned from the foregoing descriptions of the second matching type in path matching that, in this embodiment of this application, after the driving control module performs S608 by using the conventional map component, two results may be generated:

A first result: The third high-definition path matches the conventional map, that is, the conventional map component finds a second conventional path that completely matches the third high-definition path in the conventional map. The third high-definition path and the second conventional path include a same road section.

A second result: The third high-definition path does not match the conventional map, that is, the conventional map component does not find a conventional path that is the same as the third high-definition path in the conventional map.

It can be learned from the foregoing descriptions of the conventional map and the high-definition map that the conventional map includes more rich and accurate road sections than the high-definition map. Therefore, the conventional map component usually finds the second conventional path that completely matches the third high-definition path in the conventional map, that is, a probability that the driving control module obtains the first result is relatively high.

S609: When determining that a path matching result obtained in S608 is the first result, that is, when determining that the conventional map component finds the second conventional path that completely matches the third high-definition path in the conventional map, the driving control module enables a real-time navigation broadcast function of the conventional map component, so that the conventional map component can perform real-time navigation broadcast based on the second conventional path; and enables a path navigation function of the high-definition map component and an automatic driving mode of the automatic driving module, so that the automatic driving module can perform automatic driving by using the third high-definition path for path navigation.

According to the foregoing step, when determining that the conventional map component finds the second conventional path that completely matches the third high-definition path, the driving control module may perform real-time navigation broadcast based on the second conventional path, and perform automatic driving based on the third high-definition path. In this way, although a detour, a long driving time, or the like may exist for the third high-definition path, the driving control module can ensure that the vehicle uses a full-process automatic driving mode, and further implement real-time navigation broadcast by using the conventional map. This can still ensure user experience.

S610: When determining that a path matching result obtained in S608 is the second result, that is, when determining that the conventional map component fails in matching, the driving control module enables real-time navigation broadcast and path navigation functions of the high-definition map component, and enables an automatic driving mode of the automatic driving module, so that the high-definition map component can perform real-time navigation broadcast based on the third high-definition path, and the automatic driving module can perform automatic driving by using the third high-definition path for path navigation.

According to the foregoing step, when determining that a conventional path that matches the third high-definition path cannot be found in the conventional map, the driving control module enables the real-time navigation broadcast function and the automatic driving mode by using the third high-definition path, to ensure that the vehicle uses a full-process automatic driving mode. In addition, the driving control module performs real-time navigation broadcast by using the third high-definition path, so that a real-time navigation broadcast requirement of the user can be ensured, and finally user experience can be ensured.

S611: When determining that a path matching result obtained in S602 is the third result, that is, when determining that the high-definition map component fails in matching (when the first conventional path does not match the high-definition map), the driving control module calculates at least one second to-be-selected high-definition path in the high-definition map based on the current location and the target location by using the high-definition map component.

The first conventional path is a traffic route with optimal path planning, but each first to-be-selected high-definition path obtained by the high-definition map component by performing path calculation again is not similar to or is slightly similar to the first conventional path. Therefore, actually, a detour, a relatively long driving time, a relatively long total length, or the like may exist for each first to-be-selected high-definition path.

S612: The driving control module may prompt the user with path information of each of the at least one second to-be-selected high-definition path through displaying on the display and/or voice prompting.

In an implementation, the driving control module may prompt the user with the path information of each second to-be-selected high-definition path through displaying on the display, which may specifically include the following steps:

The driving control module displays the high-definition map on the display by using the human-computer interaction module, displays each second to-be-selected high-definition path in the high-definition map, and displays at least one or a combination of the following information:
a total length of each second to-be-selected high-definition path, total duration of automatic driving corresponding to each second to-be-selected high-definition path, and a length difference between each second to-be-selected high-definition path and the first conventional path.

Because each second to-be-selected high-definition path is different from the first conventional path, a detour, a relatively long driving time, a relatively long total length, or the like may exist for each second to -be-selected high-definition path. Therefore, the driving control module may display the foregoing information about each second to-be-selected high-definition path to the user, so that the user can further understand each second to -be-selected high-definition path, and the user subsequently performs path analysis, comparison, and screening.

Optionally, the driving control module may alternatively display only each second to-be-selected high-definition path in the high-definition map, and prompt the user with the foregoing information about each second to-be-selected high-definition path through voice prompting. In this way, the driving control module may prompt the user with the path information of each second to-be-selected high-definition path by using a combination of displaying and voice prompting.

S613: The driving control module receives a second path selection instruction of the user from a human-computer interaction input/output component such as the display, an audio circuit, or a physical button by using the internal human-computer interaction module, and determines, according to the second path selection instruction, a fourth high-definition path selected by the user from the at least one second to-be-selected high-definition path.

S614: The driving control module matches the fourth high-definition path with the conventional map by using the conventional map component.

Because the fourth high-definition path and the first conventional path have different routes, if the vehicle automatically travels based on the fourth high-definition path, the driving control module cannot perform real-time navigation broadcast based on the first conventional path. To improve user experience, a conventional path is used as a basis for real-time navigation broadcast as much as possible, and the driving control module may match the fourth high-definition path with the conventional map to attempt to search the conventional map for a conventional path, as a basis for real-time navigation broadcast, that completely matches the fourth high-definition path.

Similar to S608, after the driving control module performs S614 by using the conventional map component, two results may also be generated:

A first result: The fourth high-definition path matches the conventional map, that is, the conventional map component finds a third conventional path that completely matches the fourth high-definition path in the conventional map. The fourth high-definition path and the third conventional path include a same road section.

A second result: The fourth high-definition path does not match the conventional map, that is, the conventional map component does not find a conventional path that is the same as the fourth high-definition path in the conventional map.

S615: When determining that a path matching result obtained in S614 is the first result, that is, when determining that the conventional map component finds the third conventional path that completely matches the fourth high-definition path in the conventional map, the driving control module enables a real-time navigation broadcast function of the conventional map component, so that the conventional map component performs real-time navigation broadcast based on the third conventional path; and enables a path navigation function of the high-definition map component and an automatic driving mode of the automatic driving module, so that the automatic driving module can perform automatic driving by using the fourth high-definition path for path navigation.

According to the foregoing step, when determining that the conventional map component finds the third conventional path that completely matches the fourth high-definition path, the driving control module may perform real-time navigation broadcast based on the third conventional path, and perform automatic driving based on the fourth high-definition path. In this way, although a detour, a long driving time, or the like may exist when the vehicle travels to the target location, the driving control module can ensure that the vehicle uses a full-process automatic driving mode, and further implement real-time navigation broadcast by using the conventional map. This can still ensure user experience.

S616: When determining that a path matching result obtained in S614 is the second result, that is, when determining that the conventional map component fails in matching (when the fourth high-definition path does not match the conventional map), the driving control module enables real-time navigation broadcast and path navigation functions of the high-definition map component, and enables an automatic driving mode of the automatic driving module, so that the high-definition map component can perform real-time navigation broadcast based on the fourth high-definition path, and the automatic driving module can perform automatic driving by using the fourth high-definition path for path navigation.

According to the foregoing step, when determining that a conventional path that matches the fourth high-definition path cannot be found in the conventional map, the driving control module enables the real-time navigation broadcast function and the automatic driving mode by using the fourth high-definition path, to ensure that the vehicle uses a full-process automatic driving mode. In addition, the driving control module performs real-time navigation broadcast by using the fourth high-definition path, so that a real-time navigation broadcast requirement of the user can be ensured, and finally user experience can be ensured.

The preparatory automatic driving mode in the foregoing embodiment is more complex than the automatic driving mode and the manual driving mode, and relates to a driving mode switching occasion and the like. Therefore, an embodiment of this application further provides a driving control method used after the vehicle enables the preparatory automatic driving mode. For example, after the vehicle-mounted device enables the preparatory automatic driving mode in S607, the method includes the following steps:
A: If the driving control module determines that the current location is different from a start location of the 1^{st} road section in the second high-definition path (for example, the second high-definition path is the high-definition path β2 shown in b in FIG. 3 or the high-definition path β3 shown in b in FIG. 4), the driving control module prompts the user to enable the manual driving mode of the vehicle. Alternatively, if the vehicle-mounted device determines that the current location is the same as a start location of the 1^{st} road section in the second high-definition path (for example, the second high-definition path is the high-definition path β1 shown in b in FIG. 2), the vehicle-mounted device directly enables or prompts the user to enable the automatic driving mode of the vehicle.
B: If the vehicle-mounted device determines that a location of the vehicle in a traveling process is in a first range in which a start location of a first road section in the second high-definition path is located, the vehicle-mounted device prompts the user to enable the automatic driving mode of the vehicle (that is, switches a driving mode). The start location of the first road section is different from the current location, and there is no road section connected to the start location of the first road section in the second high-definition path. The first range may be 5 m or 10 ms before and after the start location of the first road section, and a specific value range of the first range may be set by the user, or may be set by the vehicle-mounted device according to an actual situation, or may be set in advance by a manufacturer of the vehicle-mounted device.
   For example, when the second high-definition path is the high-definition path β1 shown in b in FIG. 2, the first road section may be the road section J in the high-definition path β1. When the second high-definition path is the high-definition path β2 shown in b in FIG. 3, the first road section may be a part of the road section H in the high-definition path β2. When the second high-definition path is the high-definition path β3 shown in b in FIG. 4, the first road section may be a part of the road section H in the high-definition path β3.
C: If the vehicle-mounted device determines that a location of the vehicle in a traveling process is in a second range in which an end location of a second road section in the second high-definition path is located, the vehicle-mounted device prompts the user to enable the manual driving mode of the vehicle (that is, switches a driving mode). The end location of the second road section is different from the target location, and there is no road section connected to the end location of the second road section in the second high-definition path.

For example, when the second high-definition path is the high-definition path β1 shown in b in FIG. 2, the second road section may be a part of the road section F in the high-definition path β1. When the second high-definition path is the high-definition path β3 shown in b in FIG. 4, the second road section may be a part of the road section J in the high-definition path β3.

In addition, after the vehicle-mounted device prompts the user to enable the manual driving mode of the vehicle in the foregoing step, the method further includes: The vehicle-mounted device prompts the user with current manual driving information. The manual driving information includes a current manual driving distance and/or current manual driving duration.

The vehicle-mounted device may immediately prompt the user of the manual driving information after prompting the user to enable the manual driving mode. In this way, the vehicle-mounted device may provide the current manual driving information for the user, so that the user can prepare for current manual driving, and the user finally decides on whether to enable the manual driving mode.

The vehicle-mounted device may further prompt the user of the manual driving information after enabling the manual driving mode through setting.

It should be noted that the vehicle-mounted device may also prompt the user of the manual driving information through displaying on the display and/or voice prompting.

To ensure traveling safety of the vehicle, after the vehicle-mounted device prompts the user to enable the manual driving mode of the vehicle, in a process in which the vehicle enables the manual driving mode, the vehicle-mounted device may further determine, through positioning, a traveling route indicating whether the vehicle deviates from the second high-definition path, and if the vehicle-mounted device determines that the location of the vehicle in the traveling process deviates from the second high-definition path, the vehicle exits the preparatory automatic driving mode. After the vehicle-mounted device prompts the user to enable the automatic driving mode of the vehicle, when the vehicle exits the automatic driving mode, the vehicle-mounted device needs to determine whether a current exit reason is the normal switching shown in step C. If yes, the vehicle-mounted device continues to maintain the preparatory automatic driving mode. Otherwise (for example, when the user forces manual takeover, the vehicle turns off, or the vehicle-mounted device determines to forcibly exit the automatic driving mode in an emergency), the vehicle exits the preparatory automatic driving mode and directly switches to the manual driving mode.

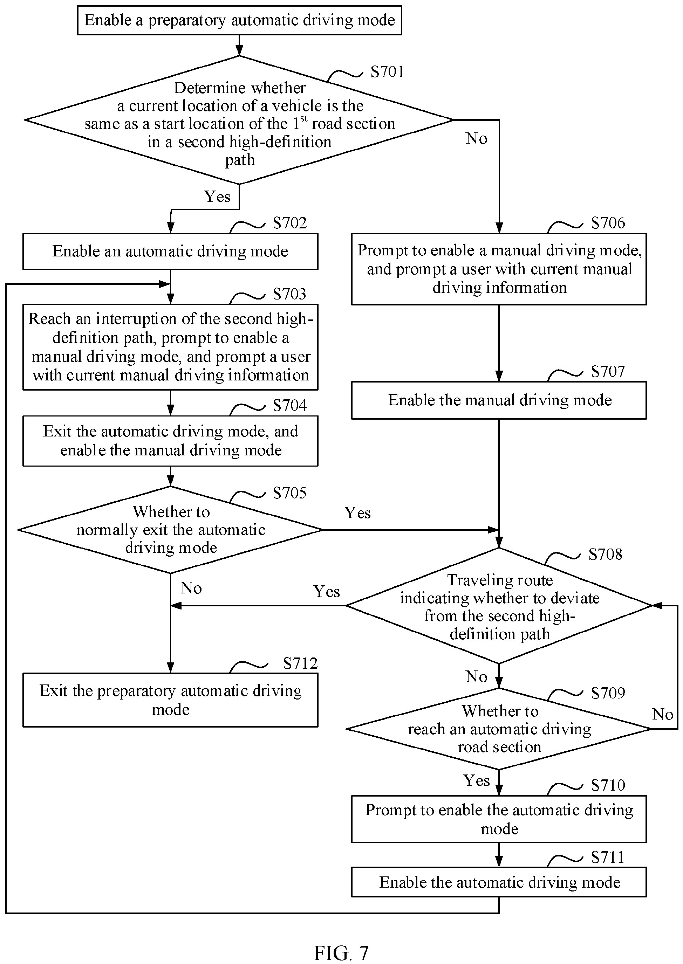

According to the foregoing steps, an embodiment of this application further provides a driving control method instance used after the vehicle enables the preparatory automatic driving mode. As shown in FIG. 7, the method specifically includes the following steps.

S701: After the driving control module performs S607 to enable the path navigation function of the high-definition map component and the preparatory automatic driving mode of the automatic driving module and then the automatic driving module can perform automatic driving by using the second high-definition path for path navigation, the vehicle-mounted device determines whether the current location of the vehicle is the same as the start location of the 1^{st} road section in the second high-definition path; and if yes, S702 is performed; otherwise, S706 is performed.

S702: When the current location of the vehicle is the same as the start location of the 1^{st} road section in the second high-definition path, the driving control module directly enables the automatic driving mode of the automatic driving module, so that the automatic driving module performs path navigation based on the second high-definition path.

S703: The driving control module determines a location of the vehicle in a traveling process; and when determining that the vehicle reaches an interruption of the second high-definition path, the driving control module prompts the user to enable the manual driving mode and prompts the user of current manual driving information through displaying on the display or voice prompting.

The interruption of the second high-definition path is in the second range in which the end location of the second road section of the second high-definition path recorded in step C is located.

S704: After receiving a mode switching indication of the user from the human-computer interaction input/output component by using the human-computer interaction module, the driving control module exits the automatic driving mode of the automatic driving module, and enables the manual driving mode.

S705: Each time the automatic driving module exits the automatic driving mode, the driving control module needs to determine whether the exit is "normally exiting the automatic driving mode". If yes, the driving control module performs step S708 related to the manual driving mode; otherwise, the driving control module performs S712 to directly exit the preparatory automatic driving mode and directly enable the manual driving mode without prompting to switch the driving mode.

Herein, "normally exiting the automatic driving mode" means that the vehicle exits the automatic driving mode because the vehicle reaches the interruption of the second high-definition path. Exiting the automatic driving mode due to another reason is not normally exiting the automatic driving mode.

S706: When the current location of the vehicle is different from the start location of the 1^{st} road section in the second high-definition path, prompt the user to enable the manual driving mode, and prompt the user of the current manual driving information.

S707: After receiving a mode confirmation indication of the user, the driving control module enables the manual driving mode.

S708: In a process in which the vehicle enables the manual driving mode, the driving control module may further determine, through positioning, a traveling route indicating whether the vehicle deviates from the second high-definition path. If the driving control module determines that the location of the vehicle in the traveling process deviates from the second high-definition path, the driving control module performs S712 to exit the preparatory automatic driving mode; otherwise, the driving control module performs S709.

S709: The driving control module determines the location of the vehicle in the traveling process, and determines whether the vehicle reaches a road section on which automatic driving is enabled. If yes, the driving control module performs S710; otherwise, the driving control module continues to perform S708.

That the driving control module determines whether the vehicle reaches a road section on which automatic driving is enabled means that the driving control module determines whether the vehicle reaches the first range in which the start location of the first road section in the second high-definition path is located and that is recorded in step B.

S710: The driving control module prompts the user to enable the automatic driving mode through displaying on the display or voice prompting.

S711: After receiving a mode switching indication of the user, the driving control module exits the manual driving mode, and enables the automatic driving mode of the automatic driving module.

It should be noted that, after enabling the automatic driving mode, the driving control module continues to perform S703 to continue to determine whether the vehicle reaches the interruption of the second high-definition path; and when the vehicle reaches the interruption, the driving control module prompts to enable the manual driving mode, and prompts the user of current manual driving information.

S712: The driving control module exits the preparatory automatic driving mode, and directly enables the manual driving mode without prompting to switch the driving mode.

According to the foregoing steps, the driving control module may position the vehicle, so as to prompt the user to prompt, on a corresponding road section, the user to enable a corresponding driving mode. This implements continuous switching between the manual driving mode and the automatic driving mode.

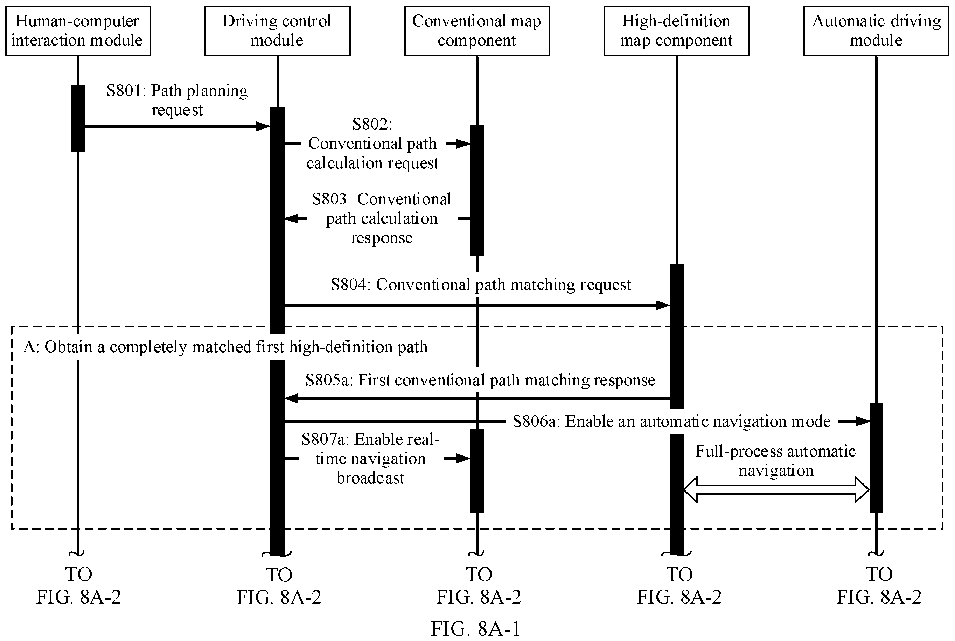

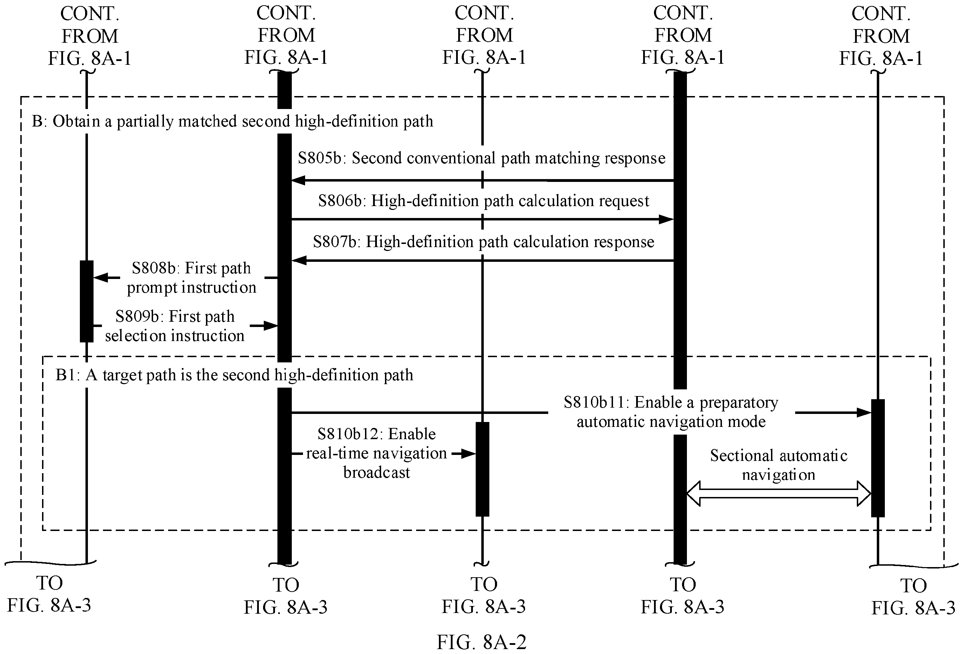

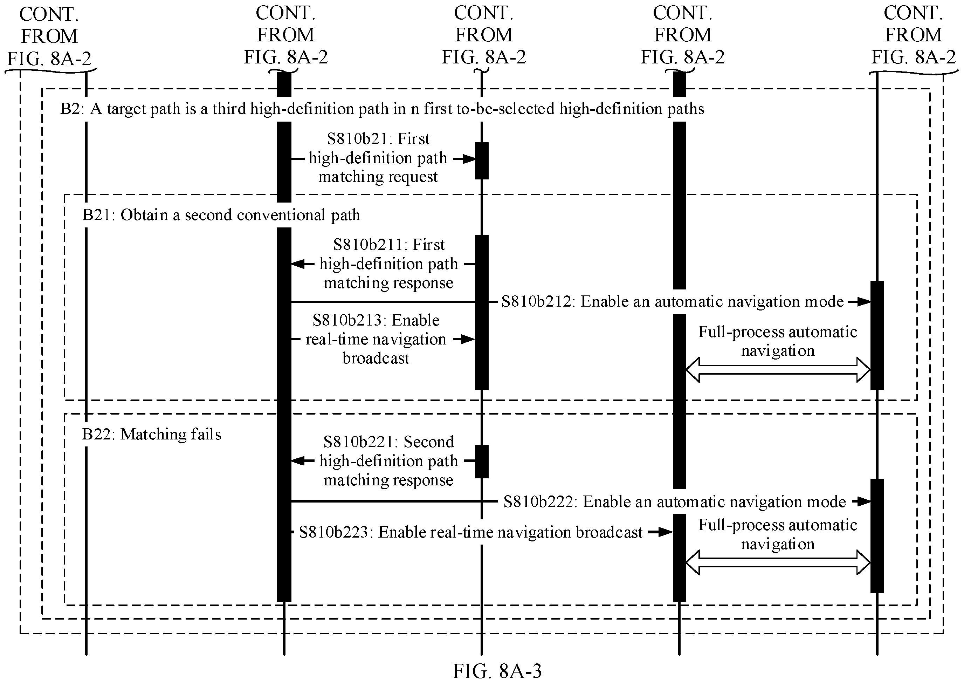

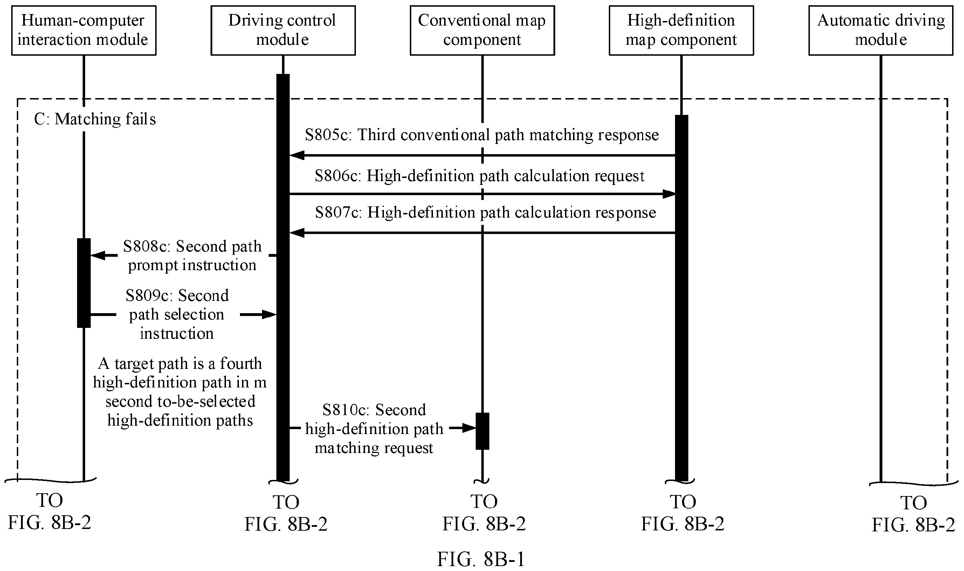

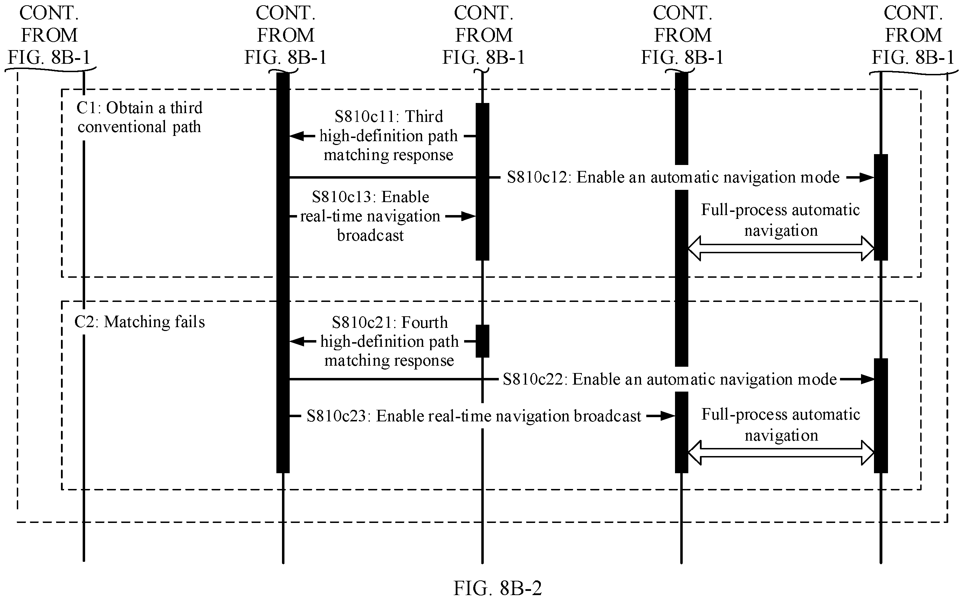

According to the embodiment in FIG. 5B and the embodiment in FIG. 6, this application further provides a driving control method instance. This instance is described by using an example in which the vehicle -mounted device is the architecture of the vehicle shown in FIG. 5A. As shown in FIG. 5A, internal software modules of the vehicle-mounted device include the human-computer interaction module, the driving control module, the conventional map component, the high-definition map component, the automatic driving module, and the like. The following specifically describes the steps in this instance with reference to flowcharts shown in FIG. 8A and FIG. 8B.

S801: After obtaining, from a human-computer interaction input/output component, a path planning request entered by a user, the human-computer interaction module sends the path planning request to the driving control module. The path planning request is used to indicate the driving control module to perform a path planning operation. Optionally, the path planning request may include a target location entered by the user.

S802: The driving control module sends a conventional path calculation request to the conventional map component based on the path planning request.

Optionally, the conventional path calculation request may include a current location of the vehicle that is determined by the driving control module and a target location that the user expects to reach. The target location may be included in the path planning request, or may be determined by the driving control module based on a historical traveling record.

S803: After receiving the conventional path calculation request, the conventional map component obtains a first conventional path through calculation in a conventional map based on the current location of the vehicle and the target location that the user expects to reach, and then sends a conventional path calculation response to the driving control module. The conventional path calculation response is used to notify the driving control module that the conventional map component finds the first conventional path. Optionally, the conventional path calculation response may include data of the first conventional path.

Optionally, when the conventional path calculation request does not include the current location and the target location, the conventional map component may determine the current location through positioning, and determine the target location based on the historical traveling record.

S804: The driving control module sends a conventional path matching request to the high-definition map component. The conventional path matching request may carry the data of the first conventional path.

After receiving the conventional path matching request, the high-definition map component obtains the data of the first conventional path from the conventional path matching request or from the conventional map component, and then matches the first conventional path with a high-definition map. In this case, three matching results may be obtained: A: A first high-definition path that completely matches the first conventional path is obtained. B: A second high-definition path that partially matches the first conventional path is obtained. C: The matching fails, and no high-definition path is found.

S805a to S807a are corresponding steps when the matching result is A, S805b to 810b223 are corresponding steps when the matching result is B, and S805c to 810c23 are corresponding steps when the matching result is C. The following separately describes the steps corresponding to each matching result.

S805a: After obtaining the first high-definition path that completely matches the first conventional path, the high-definition map component sends a first conventional path matching response to the driving control module. The first conventional path matching response is used to notify the driving control module that the high-definition map component finds the completely matched first high-definition path. Optionally, the first conventional path matching response includes data of the first high-definition path.

S806a: The driving control module enables an automatic driving mode of the automatic driving module, including enabling path navigation of the high-definition map component based on the first high-definition path. In this way, the automatic driving module can perform full-process automatic navigation based on the first high-definition path in the high-definition map component.

S807a: The driving control module enables real-time navigation broadcast of the conventional map component based on the first conventional path.

S805b: After obtaining the second high-definition path that partially matches the first conventional path, the high-definition map component sends a second conventional path matching response to the driving control module. The second conventional path matching response is used to notify the driving control module that the high-definition map component finds the partially matched second high-definition path. Optionally, the second conventional path matching response includes data of the second high-definition path.

S806b: After receiving the second conventional path matching response, the driving control module sends a high-definition path calculation request to the high-definition map component, where the high-definition path calculation request may include the current location and the target location.

S807b: The high-definition map component calculates n first to-be-selected high-definition paths in the high-definition map based on the current location and the target location, and then the high-definition map component sends a high-definition path calculation response to the driving control module. The high-definition path calculation response is used to notify the driving control module that the high-definition map component obtains the n first to-be-selected high-definition paths through calculation, where n is an integer greater than 0. Optionally, the high-definition path calculation response includes data of the n first to-be-selected high-definition paths.

S808b: The driving control module sends a first path prompt instruction to the human-computer interaction module, to indicate the human-computer interaction module to prompt the user with path information of the second high-definition path and path information of each first to-be-selected high-definition path.

In this way, the human-computer interaction module can prompt the user with the foregoing path information according to the first path prompt instruction through displaying on a display and/or voice prompting.

S809b: After receiving, from the human-computer interaction input/output component, the first path selection instruction entered by the user, the human-computer interaction module sends the first path selection instruction to the driving control module. The first path selection instruction is used to determine a target high-definition path selected by the user from the second high-definition path and the n first to-be-selected high-definition paths.

The driving control module determines the target high-definition path according to the first path selection instruction. The target high-definition path may include two cases: B1: The target high-definition path is the second high-definition path. B2: The target high-definition path is a third high-definition path in the n first to-be-selected high-definition paths.

S810b11 and S810b12 are corresponding steps when the target high-definition path is B1, and S810b21 to S810b222 are corresponding steps when the target high-definition path is B2.

S810b11: When determining that the target high-definition path is the second high-definition path, the driving control module enables a preparatory automatic navigation mode of the automatic driving module, including enabling path navigation of the high-definition map component based on the second high-definition path. In this way, the automatic driving module can perform sectional automatic navigation based on the second high-definition path in the high-definition map component. For a specific process, refer to the instance shown in FIG. 7.

S810b12: The driving control module enables real-time navigation broadcast of the conventional map component based on the first conventional path.

S810b21: When determining that the target high-definition path is the third high-definition path, the driving control module sends a first high-definition path matching request to the conventional map component. The first high-definition path matching request may carry data of the third high-definition path or indication information of the third high-definition path.

After receiving the first high-definition map matching request, the conventional map component obtains the data of the third high-definition path from the first high-definition map matching request or obtains the data of the third high-definition path from the high-definition map component based on the indication information of the third high-definition path, and then matches the third high-definition path with the conventional map. In this case, two matching results may be obtained: B21: A second conventional path that completely matches the third high-definition path is obtained. B22: The matching fails, and no conventional path that completely matches the third high-definition path is found.

S810b211 to S810b213 are corresponding steps when the matching result is B21, and S810b221 to S810b223 are corresponding steps when the matching result is B22.

S810b211: The conventional map component sends a first high-definition path matching response to the driving control module. The first high-definition path matching response is used to notify the driving control module that the conventional map component finds the completely matched second conventional path

S810b212: The driving control module enables an automatic driving mode of the automatic driving module, including enabling path navigation of the high-definition map component based on the third high-definition path. In this way, the automatic driving module can perform full-process automatic navigation based on the third high-definition path in the high-definition map component.

S810b213: The driving control module enables real-time navigation broadcast of the conventional map component based on the first conventional path.

S810b221: After failing in matching, the conventional map component sends a second high-definition path matching response to the driving control module. The second high-definition path matching response is used to notify the driving control module that the conventional map component fails in matching.

S810b222: The driving control module enables an automatic driving mode of the automatic driving module, including enabling path navigation of the high-definition map component based on the third high-definition path. In this way, the automatic driving module can perform full-process automatic navigation based on the third high-definition path in the high-definition map component.

S810b223: The driving control module enables real-time navigation broadcast of the high-definition map component based on the third high-definition path.

S805c: After failing in the matching, the high-definition map component sends a third conventional path matching response to the driving control module. The third conventional path matching response is used to notify the driving control module that the high-definition map component fails in matching.

S806c: After receiving the third conventional path matching response, the driving control module sends a high-definition path calculation request to the high-definition map component, where the high-definition path calculation request may include the current location and the target location.

S807c: The high-definition map component calculates m second to-be-selected high-definition paths in the high-definition map based on the current location and the target location, and then the high-definition map component sends a high-definition path calculation response to the driving control module. The high-definition path calculation response is used to notify the driving control module that the high-definition map component obtains the m second to-be-selected high-definition paths through calculation, where m is an integer greater than 0. Optionally, the high-definition path calculation response includes data of the m second to-be-selected high-definition paths.

S808c: The driving control module sends a second path prompt instruction to the human-computer interaction module, to indicate the human-computer interaction module to prompt the user with path information of each second to-be-selected high-definition path.

In this way, the human-computer interaction module can prompt the user with the foregoing path information according to the second path prompt instruction through displaying on a display and/or voice prompting.

S809c: After receiving, from the human-computer interaction input/output component, the second path selection instruction entered by the user, the human-computer interaction module sends the second path selection instruction to the driving control module. The second path selection instruction is used to determine a fourth high-definition path selected by the user from the m second to-be-selected high-definition paths.

S810c: After determining, according to the second path selection instruction, the fourth high-definition path selected by the user, the driving control module sends a second high-definition path matching request to the conventional map component. The second high-definition path matching request may carry data of the fourth high-definition path or indication information of the fourth high-definition path.

After receiving the second high-definition map matching request, the conventional map component obtains the data of the fourth high-definition path from the second high-definition map matching request or obtains the data of the fourth high-definition path from the high-definition map component based on the indication information of the fourth high-definition path, and then matches the fourth high-definition path with the conventional map. In this case, two matching results may be obtained: C1: A third conventional path that completely matches the fourth high-definition path is obtained. C2: The matching fails, and no conventional path that completely matches the fourth high-definition path is found.

S810c11 to S810c13 are corresponding steps when the matching result is C1, and S810c21 to S810c23 are corresponding steps when the matching result is C2.

S810c11: The conventional map component sends a third high-definition path matching response to the driving control module. The third high-definition path matching response is used to notify the driving control module that the conventional map component finds the completely matched third conventional path

S810c12: The driving control module enables an automatic driving mode of the automatic driving module, including enabling path navigation of the high-definition map component based on the fourth high-definition path. In this way, the automatic driving module can perform full-process automatic navigation based on the fourth high-definition path in the high-definition map component.

S810c13: The driving control module enables real-time navigation broadcast of the conventional map component based on the third conventional path.

S810c21: After failing in matching, the conventional map component sends a fourth high-definition path matching response to the driving control module. The fourth high-definition path matching response is used to notify the driving control module that the conventional map component fails in matching.

S810c22: The driving control module enables an automatic driving mode of the automatic driving module, including enabling path navigation of the high-definition map component based on the fourth high-definition path. In this way, the automatic driving module can perform full-process automatic navigation based on the fourth high-definition path in the high-definition map component.

S810c23: The driving control module enables real-time navigation broadcast of the high-definition map component based on the fourth high-definition path.

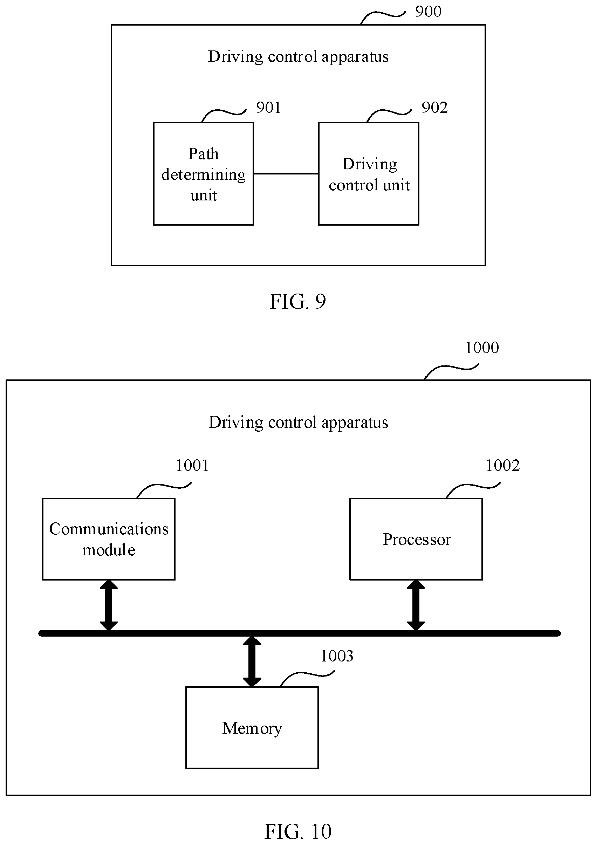

According to the foregoing embodiment, an embodiment of this application further provides a driving control apparatus. The apparatus may be applied to the vehicle shown in FIG. 5A, and is configured to implement the driving control method provided in the foregoing embodiment. As shown in FIG. 9, the apparatus may include:
a path determining unit 901, configured to: calculate a first conventional path in the conventional map based on a first location and a second location; and search the high-definition map based on the first conventional path for a target high-definition path; and
a driving control unit 902, configured to: if the target high-definition path and the first conventional path include a same road section, enable real-time navigation broadcast based on the first conventional path, and enable an automatic driving mode in which the target high-definition path is used for path navigation.

In an implementation, the path determining unit 901 is further configured to: if the target high-definition path includes fewer road sections than the first conventional path, calculate at least one first to-be-selected high-definition path in the high-definition map based on the first location and the second location; prompt a user with path information of the target high-definition path and path information of each of the at least one first to -be-selected high-definition path; receive a first path selection instruction of the user; and determine, according to the first path selection instruction, a high-definition path selected by the user from the target high-definition path and the at least one first to-be-selected high-definition path.

The driving control unit 902 is further configured to: if it is determined, according to the first path selection instruction, that the user selects the target high-definition path, enable the real-time navigation broadcast based on the first conventional path, and enable a preparatory automatic driving mode in which the target high-definition path is used for path navigation, where the preparatory automatic driving mode is a driving mode switched between an automatic driving mode and a manual driving mode.

The path determining unit 901 is further configured to: if the path determining unit determines, according to the first path selection instruction, that the user selects a first high-definition path from the at least one first to-be-selected high-definition path, search the conventional map based on the first high-definition path for a first target conventional path, where the first target conventional path and the first high-definition path include a same road section.

The driving control unit 902 is further configured to: if the first target conventional path is found, enable real-time navigation broadcast based on the first target conventional path, and enable an automatic driving mode in which the first high-definition path is used for path navigation; or if the first target conventional path is not found, enable real-time navigation broadcast based on the first high-definition path, and enable an automatic driving mode in which the first high-definition path is used for path navigation.

In an implementation, when prompting the user with the path information of the target high-definition path and the path information of each of the at least one first to-be-selected high-definition path, the path determining unit 901 is specifically configured to:
display the high-definition map on a display, display the target high-definition path in the high-definition map, and display at least one or a combination of the following information:
a start location of the target high-definition path, an end location of the target high-definition path, each manual driving duration, each manual driving distance, each automatic driving duration, each automatic driving distance, total manual driving duration, a total manual driving distance, total automatic driving duration, and a total automatic driving distance; and
display each first to-be-selected high-definition path in the high-definition map, and display at least one or a combination of the following information of each first to-be-selected high-definition path:
   a total length of each first to-be-selected high-definition path, total duration of automatic driving corresponding to each first to-be-selected high-definition path, and a length difference between each first to-be-selected high-definition path and the first conventional path.

In an implementation, the path determining unit 901 is further configured to: if the path determining unit does not find the target high-definition path in the high-definition map, calculate at least one second to-be-selected high-definition path in the high-definition map based on the first location and the second location; prompt the user with path information of each of the at least one second to-be-selected high-definition path; receive a second path selection instruction of the user, and determine, according to the second path selection instruction, a second high-definition path selected by the user from the at least one to-be-selected high-definition path; and search the conventional map based on the second high-definition path for a second target conventional path, where the second target conventional path and the second high-definition path include a same road section.

The driving control unit 902 is further configured to: if the second target conventional path is found, enable real-time navigation broadcast based on the second target conventional path, and enable an automatic driving mode in which the second high-definition path is used for path navigation; or if the second target conventional path is not found, enable a real-time navigation broadcast function based on the second high-definition path, and enable an automatic driving mode in which the second high-definition path is used for path navigation.

In an implementation, when prompting the user with the path information of each of the at least one second to-be-selected high-definition path, the path determining unit 901 is specifically configured to:
display the high-definition map on the display, display each second to-be-selected high-definition path in the high-definition map, and display at least one or a combination of the following information of each second to-be-selected high-definition path:
a total length of each second to-be-selected high-definition path, total duration of automatic driving corresponding to each second to-be-selected high-definition path, and a length difference between each second to-be-selected high-definition path and the first conventional path.

In an implementation, the driving control unit 902 is further configured to:
after enabling the preparatory automatic driving mode in which the target high-definition path is used for path navigation, if it is determined that a location of a vehicle in a traveling process is in a first range, prompt the user to enable the automatic driving mode, where the first range includes a start location of a first road section in the target high-definition path, the start location of the first road section is different from the first location, and there is no road section connected to the start location of the first road section in the target high-definition path; or
if it is determined that a location of a vehicle in a traveling process is in a second range, prompt the user to enable the manual driving mode, where the second range includes an end location of a second road section, the end location of the second road section is different from the second location, and there is no road section connected to the end location of the second road section in the target high-definition path.

In an implementation, the driving control unit 902 is further configured to:
if the first location is different from a start location of the 1^{st} road section in the target high-definition path, prompt the user to enable the manual driving mode; or
if the first location is the same as a start location of the 1^{st} road section in the target high-definition path, enable the automatic driving mode.

In an implementation, the driving control unit 902 is further configured to:
after prompting the user to enable the manual driving mode, prompt the user with current manual driving information, where the current manual driving information includes a current manual driving distance and/or current manual driving duration.

It should be noted that, in embodiments of this application, division into modules is an example, and is merely a logical function division. During actual implementation, there may be another division manner. In addition, function units in embodiments of this application may be integrated into one processing unit, or may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

According to the foregoing embodiment, an embodiment of this application further provides a driving control apparatus. The apparatus may be applied to the vehicle shown in FIG. 5A, is configured to implement the driving control method, and has functions of the apparatus shown in FIG. 9. As shown in FIG. 10, the apparatus 1000 includes a communications module 1001, a processor 1002, and a memory 1003.

The communications module 1001, the memory 1003, and the processor 1002 are connected to each other. Optionally, the communications module 1001, the memory 1003, and the processor 1002 may be connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 10, but this does not mean that there is only one bus or only one type of bus.

The communications module 1001 is configured to communicate with another device. For example, the communications module 1001 may include a communications interface and a wireless communications module. The communications interface is configured to communicate with another component in the vehicle. For example, the vehicle-mounted device may obtain various data from components such as an on-board sensor and a driver input apparatus through the communications interface. For another example, the apparatus may send a torque control command to a motor through the communications interface. The wireless communications module is configured to: access a communications system and finally connect to a server, download software and map data of a conventional map component and a high-definition map component from the server, and obtain traffic information and the like that are updated in real time. For example, the wireless communications module may include a Bluetooth module, a WiFi module, and an RF circuit.

The processor 1002 is configured to implement the driving control method provided in the embodiment shown in FIG. 5B to FIG. 8B. For details, refer to the descriptions in the foregoing embodiment. Details are not described herein again. Optionally, the processor 1002 may be a central processing unit (central processing unit, CPU) or another hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field-programmable gate array, FPGA), generic array logic (generic array logic, GAL), or any combination thereof. The processor 1002 may implement the foregoing functions by using hardware or certainly by using hardware executing corresponding software. The processor 102 is a control center of the terminal device 100, is connected to the components through various interfaces and lines, and performs various functions of the terminal device 100 and processes data by running or executing a software program and/or a module stored in the memory 103 and invoking data stored in the memory 103, to implement a plurality of services based on the terminal device 200.

The memory 1003 is configured to store a program instruction, data, and the like. For example, in this embodiment of this application, the memory 1003 stores program instructions and data of the conventional map component and the high-definition map component. Specifically, the program instructions may include program code, and the program code includes computer operation instructions. The memory 1003 may include a random access memory (random access memory, RAM), or may include a nonvolatile memory (non-volatile memory), for example, at least one magnetic disk memory. The processor 1002 executes the program stored in the memory 1003, and implements the foregoing functions by using the foregoing components, to finally implement the driving control method provided in the foregoing embodiment.

It can be understood that the memory 1003 in FIG. 10 in this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example, and not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory in the system and the method described in this specification is intended to include, but not limited to, these memories and any memory of another proper type.

According to the foregoing embodiment, an embodiment of this application further provides a computer program. When the computer program runs on a computer, the computer is enabled to perform the driving control method provided in the foregoing embodiment.

According to the foregoing embodiment, an embodiment of this application further provides a computer-readable storage medium. The computer-readable storage medium stores a computer program, and when the computer program is executed by a computer, the computer is enabled to perform the driving control method provided in the foregoing embodiment.

The storage medium may be any available medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and that can be accessed by the computer.

According to the foregoing embodiment, an embodiment of this application further provides a chip. The chip is configured to read a computer program stored in a memory, to implement the driving control method provided in the foregoing embodiment.

According to the foregoing embodiment, an embodiment of this application provides a chip system. The chip system includes a processor, configured to support a computer apparatus in implementing the functions of the service device, the forwarding device, or the site device in the foregoing embodiment. In a possible design, the chip system further includes a memory, and the memory is configured to store a program and data that are necessary for the computer apparatus. The chip system may include a chip, or may include a chip and another discrete component.

In conclusion, embodiments of this application provide a driving control method and apparatus. In the method, after obtaining a conventional path through calculation in a conventional map, the driving control apparatus may search a high-definition map for a target high-definition path that matches the conventional path. When the apparatus finds the target high-definition path that completely matches the conventional path, the apparatus enables real-time navigation broadcast based on the conventional path, and enables an automatic driving mode in which the target high-definition path is used for path navigation. Because the conventional map has advantages such as rich road sections and updated real-time traffic information, a conventional path calculated in the conventional map is more proper, and performing real-time navigation broadcast based on a conventional path in the conventional map can ensure that the user receives more traffic information more accurately. Further, using a high-definition path in the high-definition map to implement automatic driving of the vehicle can reduce user operations. In conclusion, according to this solution, the apparatus can ensure automatic driving of the vehicle as much as possible, and further implement path calculation and real-time navigation broadcast by combining the high-definition map and the conventional map. This can improve user experience.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operation steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

Clearly, a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A driving control method, comprising:
calculating a first conventional path in a conventional map based on a first location and a second location; and
when a target high-definition path is found in a high-definition map based on the first conventional path, if the target high-definition path and the first conventional path comprise a same road section, enabling real-time navigation broadcast based on the first conventional path, and enabling an automatic driving mode in which the target high-definition path is used for path navigation.

2. The method according to claim 1, wherein the method further comprises:
if the target high-definition path comprises fewer road sections than the first conventional path, calculating at least one first to-be-selected high-definition path in the high-definition map based on the first location and the second location;
prompting a user with path information of the target high-definition path and path information of each of the at least one first to-be-selected high-definition path;
receiving a first path selection instruction of the user; and
if it is determined, according to the first path selection instruction, that the user selects the target high-definition path, enabling the real-time navigation broadcast based on the first conventional path, and enabling a preparatory automatic driving mode in which the target high-definition path is used for path navigation, wherein the preparatory automatic driving mode is a driving mode switched between an automatic driving mode and a manual driving mode; or
if it is determined, according to the first path selection instruction, that the user selects a first high-definition path from the at least one first to-be-selected high-definition path, searching the conventional map based on the first high-definition path for a first target conventional path, wherein the first target conventional path and the first high-definition path comprise a same road section; and if the first target conventional path is found, enabling real-time navigation broadcast based on the first target conventional path, and enabling an automatic driving mode in which the first high-definition path is used for path navigation; or if the first target conventional path is not found, enabling real-time navigation broadcast based on the first high-definition path, and enabling an automatic driving mode in which the first high-definition path is used for path navigation.

3. The method according to claim 2, wherein the prompting the user with path information of the target high-definition path and path information of each of the at least one first to -be-selected high-definition path comprises:
displaying the high-definition map on a display, displaying the target high-definition path in the high-definition map, and displaying at least one or a combination of the following information:
a start location of the target high-definition path, an end location of the target high-definition path, each manual driving duration, each manual driving distance, each automatic driving duration, each automatic driving distance, total manual driving duration, a total manual driving distance, total automatic driving duration, and a total automatic driving distance; and
displaying each first to-be-selected high-definition path in the high-definition map, and displaying at least one or a combination of the following information of each first to-be-selected high-definition path:
a total length of each first to-be-selected high-definition path, total duration of automatic driving corresponding to each first to-be-selected high-definition path, and a length difference between each first to-be-selected high-definition path and the first conventional path.

4. The method according to any one of claims 1 to 3, wherein the method further comprises:
when the target high-definition path is not found in the high-definition map based on the first conventional path, calculating at least one second to-be-selected high-definition path in the high-definition map based on the first location and the second location;
prompting the user with path information of each of the at least one second to-be-selected high-definition path;
receiving a second path selection instruction of the user, and determining, according to the second path selection instruction, a second high-definition path selected by the user from the at least one to -be-selected high-definition path; and
searching the conventional map based on the second high-definition path for a second target conventional path, wherein the second target conventional path and the second high-definition path comprise a same road section; and if the second target conventional path is found, enabling real-time navigation broadcast based on the second target conventional path, and enabling an automatic driving mode in which the second high-definition path is used for path navigation; or if the second target conventional path is not found, enabling real-time navigation broadcast based on the second high-definition path, and enabling an automatic driving mode in which the second high-definition path is used for path navigation.

5. The method according to claim 4, wherein the prompting the user with path information of each of the at least one second to-be-selected high-definition path comprises:
displaying the high-definition map on the display, displaying each second to-be-selected high-definition path in the high-definition map, and displaying at least one or a combination of the following information of each second to-be-selected high-definition path:
a total length of each second to-be-selected high-definition path, total duration of automatic driving corresponding to each second to-be-selected high-definition path, and a length difference between each second to-be-selected high-definition path and the first conventional path.

6. The method according to claim 2 or 3, wherein after the enabling a preparatory automatic driving mode in which the target high-definition path is used for path navigation, the method further comprises:
if it is determined that a location of a vehicle in a traveling process is in a first range, prompting the user to enable the automatic driving mode, wherein the first range comprises a start location of a first road section in the target high-definition path, the start location of the first road section is different from the first location, and there is no road section connected to the start location of the first road section in the target high-definition path; or
if it is determined that a location of a vehicle in a traveling process is in a second range, prompting the user to enable the manual driving mode, wherein the second range comprises an end location of a second road section, the end location of the second road section is different from the second location, and there is no road section connected to the end location of the second road section in the target high-definition path.

7. The method according to claim 6, wherein the method further comprises:
if the first location is different from a start location of the 1^{st} road section in the target high-definition path, prompting the user to enable the manual driving mode; or
if the first location is the same as a start location of the 1^{st} road section in the target high-definition path, enabling the automatic driving mode.

8. The method according to claim 6 or 7, wherein after the prompting the user to enable the manual driving mode, the method further comprises:
prompting the user with current manual driving information, wherein the current manual driving information comprises a current manual driving distance and/or current manual driving duration.

9. A driving control apparatus, comprising:
a path determining unit, configured to: calculate a first conventional path in the conventional map based on a first location and a second location; and search the high-definition map based on the first conventional path for a target high-definition path; and
a driving control unit, configured to: if the target high-definition path and the first conventional path comprise a same road section, enable real-time navigation broadcast based on the first conventional path, and enable an automatic driving mode in which the target high-definition path is used for path navigation.

10. The apparatus according to claim 9, wherein
the path determining unit is further configured to: if the target high-definition path comprises fewer road sections than the first conventional path, calculate at least one first to-be-selected high-definition path in the high-definition map based on the first location and the second location; prompt a user with path information of the target high-definition path and path information of each of the at least one first to-be-selected high-definition path; receive a first path selection instruction of the user; and determine, according to the first path selection instruction, a high-definition path selected by the user from the target high-definition path and the at least one first to-be-selected high-definition path;
the driving control unit is further configured to: if it is determined, according to the first path selection instruction, that the user selects the target high-definition path, enable the real-time navigation broadcast based on the first conventional path, and enable a preparatory automatic driving mode in which the target high-definition path is used for path navigation, wherein the preparatory automatic driving mode is a driving mode switched between an automatic driving mode and a manual driving mode;
the path determining unit is further configured to: if the path determining unit determines, according to the first path selection instruction, that the user selects a first high-definition path from the at least one first to-be-selected high-definition path, search the conventional map based on the first high-definition path for a first target conventional path, wherein the first target conventional path and the first high-definition path comprise a same road section; and
the driving control unit is further configured to: if the first target conventional path is found, enable real-time navigation broadcast based on the first target conventional path, and enable an automatic driving mode in which the first high-definition path is used for path navigation; or if the first target conventional path is not found, enable real-time navigation broadcast based on the first high-definition path, and enable an automatic driving mode in which the first high-definition path is used for path navigation.

11. The apparatus according to claim 10, wherein when prompting the user with the path information of the target high-definition path and the path information of each of the at least one first to-be-selected high-definition path, the path determining unit is specifically configured to:
display the high-definition map on a display, display the target high-definition path in the high-definition map, and display at least one or a combination of the following information:
a start location of the target high-definition path, an end location of the target high-definition path, each manual driving duration, each manual driving distance, each automatic driving duration, each automatic driving distance, total manual driving duration, a total manual driving distance, total automatic driving duration, and a total automatic driving distance; and
display each first to-be-selected high-definition path in the high-definition map, and display at least one or a combination of the following information of each first to-be-selected high-definition path:
a total length of each first to-be-selected high-definition path, total duration of automatic driving corresponding to each first to-be-selected high-definition path, and a length difference between each first to-be-selected high-definition path and the first conventional path.

12. The apparatus according to any one of claims 9 to 11, wherein
the path determining unit is further configured to: if the path determining unit does not find the target high-definition path in the high-definition map, calculate at least one second to -be-selected high-definition path in the high-definition map based on the first location and the second location; prompt the user with path information of each of the at least one second to-be-selected high-definition path; receive a second path selection instruction of the user, and determine, according to the second path selection instruction, a second high-definition path selected by the user from the at least one to-be-selected high-definition path; and search the conventional map based on the second high-definition path for a second target conventional path, wherein the second target conventional path and the second high-definition path comprise a same road section; and
the driving control unit is further configured to: if the second target conventional path is found, enable real-time navigation broadcast based on the second target conventional path, and enable an automatic driving mode in which the second high-definition path is used for path navigation; or if the second target conventional path is not found, enable real-time navigation broadcast based on the second high-definition path, and enable an automatic driving mode in which the second high-definition path is used for path navigation.

13. The apparatus according to claim 12, wherein when prompting the user with the path information of each of the at least one second to-be-selected high-definition path, the path determining unit is specifically configured to:
display the high-definition map on the display, display each second to-be-selected high-definition path in the high-definition map, and display at least one or a combination of the following information of each second to-be-selected high-definition path:
a total length of each second to-be-selected high-definition path, total duration of automatic driving corresponding to each second to-be-selected high-definition path, and a length difference between each second to-be-selected high-definition path and the first conventional path.

14. The apparatus according to claim 10 or 11, wherein the driving control unit is further configured to:
after enabling the preparatory automatic driving mode in which the target high-definition path is used for path navigation, if it is determined that a location of a vehicle in a traveling process is in a first range, prompt the user to enable the automatic driving mode, wherein the first range comprises a start location of a first road section in the target high-definition path, the start location of the first road section is different from the first location, and there is no road section connected to the start location of the first road section in the target high-definition path; or
if it is determined that a location of a vehicle in a traveling process is in a second range, prompt the user to enable the manual driving mode, wherein the second range comprises an end location of a second road section, the end location of the second road section is different from the second location, and there is no road section connected to the end location of the second road section in the target high-definition path.

15. The apparatus according to claim 14, wherein the driving control unit is further configured to:
if the first location is different from a start location of the 1^{st} road section in the target high-definition path, prompt the user to enable the manual driving mode; or
if the first location is the same as a start location of the 1^{st} road section in the target high-definition path, enable the automatic driving mode.

16. The apparatus according to claim 14 or 15, wherein the driving control unit is further configured to:
after prompting the user to enable the manual driving mode, prompt the user with current manual driving information, wherein the current manual driving information comprises a current manual driving distance and/or current manual driving duration.

17. A driving control apparatus, comprising:
a memory, configured to store program instructions;
a communications module, configured to receive and send data; and
a processor, configured to invoke the program instructions stored in the memory, to perform the method according to any one of claims 1 to 8.

18. A computer program, wherein when the computer program runs on a computer, the computer is enabled to perform the method according to any one of claims 1 to 8.

19. A computer storage medium, wherein the computer storage medium stores a computer program, and when the computer program is executed by a computer, the computer is enabled to perform the method according to any one of claims 1 to 8.

20. A chip, wherein the chip is configured to read a computer program stored in a memory, to perform the method according to any one of claims 1 to 8.
